# EUROPEAN PATENT APPLICATION

(11) **EP 4 838 489 A1**
(43) Date of publication of application: **11.11.2026**
(21) Application number: 26175082.2
(22) Date of filing: 28.04.2026
(51) Int. Cl.: G06V 20/56, B60W 30/12, B60W 60/00, G01S 13/00

(54) **METHOD FOR PROCESSING SENSOR TRACKS AND VEHICLE THEREFOR**

(30) Priority: 07.05.2025 KR 20250058885
(71) Applicant: Hyundai Motor Company, Seoul 06797 (KR); Kia Corporation, Seoul 06797 (KR)
(72) Inventor: KIM, Su Min, 18280 Hwaseong-si, Gyeonggi-do (KR); CHOI, Woo Seok, 18280 Hwaseong-si, Gyeonggi-do (KR)
(74) Representative: Viering, Jentschura & Partner mbB Patent- und Rechtsanwälte

(57) **Abstract**

A vehicle control method and apparatus are disclosed for determining per-lane object information by mapping image-derived lane lines to radar-based sensor tracks. Image data is processed to estimate driving and surrounding lanes, including virtual lane lines generated when lane markings are missing or occluded. Radar tracks are clustered, predicted, and positioned in a common space, and each track is assigned to a corresponding lane based on track-point distribution, object behavior, and object type. A closest track for each lane is then selected to support lane-level driving decisions. The resulting per-lane closest-track information may be used to manage autonomous-driving operations, including driving-lane selection, lane-keeping, collision-avoidance control, and other vehicle-control functions.

## Description

### CROSS-REFERENCE TO RELATED APPLICATION

This application claims the benefit of priority to Korean Patent Application No. 10-2025-0058885, filed in the Korean Intellectual Property Office on May 7, 2025, the disclosure of which is incorporated herein by reference in its entirety.

### TECHNICAL FIELD

The present disclosure relates to a method for processing sensor tracks and a vehicle therefor, and more specifically, to a method for processing sensor tracks and a vehicle for improving reliability in tracking objects detected by a sensor.

### BACKGROUND

The matters described in this Background section are only for enhancement of understanding of the background of the disclosure, and should not be taken as acknowledgment that they correspond to prior art already known to those skilled in the art.

Autonomous driving functions may be applied such that the vehicle controls driving with minimal or no driver intervention.

The vehicle may recognize a surrounding environment obtained by various types of heterogeneous sensors and identify a situation around the vehicle based on the recognized surrounding environment. The vehicle may establish a control plan for autonomous driving corresponding to the identified situation to control an actuator of the vehicle.

In terms of cost and system simplification, the sensors mounted on the vehicle may include an image sensor and a radar sensor. Here, since the radar sensor is inexpensive compared to the LiDAR sensor, the vehicle may not include the LiDAR sensor and may only mount the radar sensor.

Object recognition by means of radar sensors may improve driving safety, but the tracks of objects generated with the data may be lost due to the absence of the data of the radar sensors or due to a decrease in accuracy. Objects in the lane in the vicinity of the vehicle are referred to for driving, such that a continuous maintenance of the tracks may be involved.

However, redundant tracks or false tracks (e.g., ghost tracks) may be generated due to weather conditions, clustering performance limitations of raw data obtained from radar sensors, multi-path reflections, and the like. Redundant tracks may cause incorrect merges with existing valid tracks, resulting in the removal of valid tracks. False tracks may make accurate identification with valid tracks difficult, resulting in the loss of valid tracks or increased positional inaccuracies.

### SUMMARY

Various examples of the present disclosure are to provide a method for processing sensor tracks and a vehicle therefor that improve reliability in tracking objects detected by sensors.

The various examples to be solved by the present disclosure are not limited to those mentioned above, and other problems not mentioned will be clearly understood by those of ordinary skill in the art from the following description.

According to the present disclosure, a method performed by a vehicle may comprise obtaining, via an image sensor of the vehicle, image data associated with a surrounding environment of the vehicle, detecting, via a heterogeneous sensor of the vehicle, an object in the surrounding environment of the vehicle, determining, based on the image data, a driving lane line and a surrounding lane line, wherein the driving lane line corresponds to a driving lane of the vehicle and the surrounding lane line corresponds to a surrounding lane around the driving lane, determining, for each track generated to estimate a trajectory of the object, a track lane corresponding to at least one of the driving lane or the surrounding lane, wherein the track lane is determined by associating the track with a lane defined from the image data, selecting, for the track lane, a closest track to the vehicle to generate closest track information, outputting a signal indicating the closest track information, and controlling, based on the signal, autonomous driving of the vehicle.

The method may further comprise determining, based on lane line data estimated from the image data, the driving lane line and the surrounding lane line, wherein the lane line data indicates at least one of a valid lane line or a road boundary. The method may further comprise, based on the driving lane line being determined to be the valid lane line and the road boundary, generating instruction data indicating that no surrounding lane is adjacent to the road boundary and determining, based on the instruction data and the lane line data, a surrounding lane line of the surrounding lane adjacent to the valid lane line. The method may further comprise determining, based on criteria, the track lane of the track, wherein the criteria are set based on a behavior of the object and a type of the object, wherein the criteria are defined by a first number of track points that are formed in the track and belong to the track lane, and wherein the track points comprise a center point within the track and outer points arranged on an outer boundary of the track.

The method may further comprise determining a track lane of a current track as the driving lane based on a second number of track points of the current track that belong to the driving lane being greater than the first number, wherein the determining of the track lane of the current track is based on a behavior of the object, wherein the current track is associated with a preceding track whose track lane was previously determined as the surrounding lane, and wherein a number of track points of the preceding track that belonged to the driving lane is equal to the first number. The method may further comprise determining a track lane of a current track as the surrounding lane based on a third number of track points of the current track that belong to the surrounding lane being less than the first number, wherein the determining of the track lane of the current track is based on a behavior of the object, wherein the current track is associated with a preceding track whose track lane was previously determined as the surrounding lane, and wherein a number of track points of the preceding track that belonged to the surrounding lane is less than the first number.

The method may further comprise the determining of the track lane comprises determining, in response to the type of the object being determined as an object having a size equal to or greater than a predetermined size, the track lane of the track as either the driving lane or the surrounding lane based on a lane where the center point of the track is located, and wherein the size is estimated based on at least a part of an outer boundary of the track. The method may further comprise selecting, for the track lane, the closest track among tracks, wherein the tracks exclude tracks satisfying exclusion conditions, wherein the exclusion conditions comprise a first exclusion condition and a second exclusion condition, wherein the first exclusion condition comprises a track having a track reliability value less than a predetermined reliability value, wherein the second exclusion condition comprises a track having a track maintenance value less than a predetermined track maintenance count accumulated in time series from a preceding track, and wherein the track having the track maintenance value is in a track lane defined based on a lane line that has a lane maintenance count equal to or greater than a predetermined lane maintenance count, wherein the lane line is determined based on time-series image data.

The method may further comprise estimating, based on the image data, potential lane lines associated with the driving lane and the surrounding lane line, determining a potential lane defined by the potential lane lines, determining valid lane lines and a valid lane based on verification of the potential lane lines and the potential lane, and determining, based on the valid lane lines, the driving lane line and the surrounding lane line. The method may further comprise detecting, based on the image data, a lane line adjacent to the driving lane to identify a driving perceived lane line, generating a driving virtual lane line that is laterally spaced apart from the driving perceived lane line and has same attribute information as the driving perceived lane line, and adopting the driving perceived lane line and the driving virtual lane line as the potential lane lines, wherein the same attribute information comprises a shape of the driving perceived lane line, a perceived distance indicating a distance from the vehicle to an ending point of the driving perceived lane line, and a perceived length indicating a length of a visible segment of the driving perceived lane line between a starting point and the ending point of the driving perceived lane line.

The method may further comprise generating a surrounding virtual lane line having same attribute information as the potential lane line associated with the driving lane, wherein the surrounding virtual lane line is generated by obtaining, from the image data, a width between a particular point of a surrounding perceived lane line associated with the surrounding lane and the potential lane line associated with the driving lane or, based on the width not being obtained from the image data, determining whether a track associated with a track maintenance value is present in the surrounding lane, wherein the track maintenance value is equal to or greater than a predefined track maintenance count accumulated in time series from a preceding track, and using the surrounding perceived lane line and the surrounding virtual lane line as the potential lane lines.

The method may further comprise, based on determining that the track associated with the track maintenance value is not present in the surrounding lane, generating a preliminary virtual lane line and, based on an object detected from the image data being present in a predetermined number or more within a preliminary surrounding lane, using the preliminary virtual lane line as the surrounding virtual lane line, wherein the preliminary surrounding lane is defined by the preliminary virtual lane line. The method may further comprise obtaining, based on the image data, a road boundary in a vicinity of the surrounding lane without obtaining a surrounding perceived lane line associated with the surrounding lane, generating a width between the potential lane line and the road boundary, generating a surrounding virtual lane line by spacing the surrounding virtual lane line apart from the potential lane line based on the width being greater than a threshold width or generating the surrounding virtual lane line based on the road boundary based on the width being less than or equal to the threshold width, and using the surrounding virtual lane line as the potential lane line.

The method may further comprise determining the potential lane line as at least one valid lane line based on a perceived length of the potential lane line being greater than or equal to a predetermined length and a perceived distance of the potential lane line being within a predetermined range of distances, and determining a potential driving lane as valid based on a width of the potential driving lane between adjacent valid lane lines being within a predetermined range of widths, wherein the perceived distance indicates a distance from the vehicle to an ending point of the potential lane line, wherein the perceived length indicates a length of a visible segment of the potential lane line between a starting point and the ending point of the potential lane line, and wherein the predetermined range of widths is set as a range having a margin from a standard lane width.

According to the present disclosure, a vehicle may comprise an image sensor configured to obtain image data associated with a surrounding environment of the vehicle, a heterogeneous sensor configured to detect an object in the surrounding environment of the vehicle, a processor, and a memory storing at least one instruction that, when executed by the processor, may cause the vehicle to determine, based on the image data, a driving lane line and a surrounding lane line, determine, for each track generated to estimate a trajectory of the object, a track lane corresponding to at least one of the driving lane or the surrounding lane, select, for the track lane, a closest track to the vehicle to generate closest track information, output a signal indicating the closest track information, and control, based on the signal, autonomous driving of the vehicle.

The vehicle may further be configured to determine, based on lane line data estimated from the image data, the driving lane line and the surrounding lane line, wherein the lane line data indicates at least one of a valid lane line or a road boundary. The vehicle may further be configured to generate instruction data indicating that no surrounding lane is adjacent to the road boundary based on the driving lane line being determined to be the valid lane line and the road boundary, and determine, based on the instruction data and the lane line data, a surrounding lane line adjacent to the valid lane line. The vehicle may further be configured to determine, based on criteria, the track lane of the track, wherein the criteria are set based on a behavior of the object and a type of the object, wherein the criteria are defined by a number of track points formed in the track and belonging to the track lane, and wherein the track points comprise a center point within the track and outer points arranged on an outer boundary of the track.

The vehicle may further be configured to select, for each track lane, the closest track from among tracks excluding tracks satisfying exclusion conditions, wherein the exclusion conditions comprise a track having a track reliability value less than a predetermined reliability value or a track having a track maintenance value less than a predetermined track maintenance count accumulated in time series from a preceding track, and wherein the track having the track maintenance value is in a track lane defined based on a lane line that has a lane maintenance count equal to or greater than a predetermined lane maintenance count, wherein the lane line is determined based on time-series image data. The vehicle may further be configured to estimate, based on the image data, potential lane lines associated with the driving lane and the surrounding lane, determine a potential lane based on the potential lane lines, determine valid lane lines and a valid lane based on verification of the potential lane lines and the potential lane, and determine, based on the valid lane lines, the driving lane line and the surrounding lane line.

According to the present disclosure, a vehicle may comprise an image sensor configured to obtain image data associated with a surrounding environment of the vehicle, a second sensor configured to obtain second data associated with the surrounding environment of the vehicle, and a processor circuit configured to cause the vehicle to determine, based on the image data, a driving lane line and a surrounding lane line, determine a plurality of lanes comprising the driving lane and the surrounding lane, determine, for each of a plurality of tracks generated to estimate trajectories of corresponding objects represented by the second data, a track lane by associating the respective track with one lane in the plurality of lanes, select, for each lane in the plurality of lanes, a closest track to the vehicle from among tracks associated with that lane, output a signal indicating the closest track, and control, based on the signal, autonomous driving of the vehicle.

The features briefly summarized above for this disclosure are only examples of the detailed description of the disclosure which follow and are not intended to limit the scope of the disclosure.

### BRIEF DESCRIPTION OF THE DRAWINGS

FIG. 1 shows an example of a vehicle communicating with another device to transmit and receive data.
FIG. 2 shows an example of modules constituting a vehicle.
FIG. 3 shows an example of object recognition using a radar sensor.
FIG. 4 shows an example of modules constituting a server.
FIG. 5 shows an example of a method for processing sensor tracks.
FIG. 6 shows an example of lane line data generation.
FIG. 7 shows an example of lane line data generation.
FIG. 8 shows an example of determining a driving lane line and surrounding lane lines.
FIG. 9 shows an example of determining a driving lane line and surrounding lane lines.
FIG. 10 shows an example of determining a driving lane line and surrounding lane lines.
FIG. 11 shows an example of determining surrounding lane lines.
FIG. 12 shows an example of the determination of a track lane.
FIG. 13 shows an example computing system.

### DETAILED DESCRIPTION

Hereinafter, examples of the present disclosure will be described in detail with reference to the accompanying drawings so that those skilled in the art may easily implement the present disclosure. However, the present disclosure may be implemented in various ways and is not limited to the examples described therein.

In describing examples of the present disclosure, well-known functions or constructions will not be described in detail since they may unnecessarily obscure the understanding of the present disclosure. The same constituent elements in the drawings are denoted by the same reference numerals, and a repeated description of the same elements will be omitted.

In the present disclosure, when an element is simply referred to as being "connected to", "coupled to" or "linked to" another element, this may mean that an element is "directly connected to", "directly coupled to" or "directly linked to" another element or is connected to, coupled to or linked to another element with the other element intervening therebetween. In addition, when an element "includes" or "has" another element, this means that one element may further include another element without excluding another component unless specifically stated otherwise.

In the present disclosure, the terms first, second, etc. are only used to distinguish one element from another and do not limit the order or the degree of importance between the elements unless specifically mentioned. Accordingly, a first element in an example could be termed a second element in another example, and, similarly, a second element in an example could be termed a first element in another example, without departing from the scope of the present disclosure.

In the present disclosure, elements that are distinguished from each other are for clearly describing each feature, and do not necessarily mean that the elements are separated. That is, a plurality of elements may be integrated in one hardware or software unit, or one element may be distributed and formed in a plurality of hardware or software units. Therefore, even if not mentioned otherwise, such integrated or distributed examples are included in the scope of the present disclosure.

In the present disclosure, elements described in various examples do not necessarily mean essential elements, and some of them may be optional elements. Therefore, an example composed of a subset of elements described in an example is also included in the scope of the present disclosure. In addition, examples including other elements in addition to the elements described in the various examples are also included in the scope of the present disclosure.

The advantages and features of the present disclosure and the way of attaining them will become apparent with reference to examples described below in detail in conjunction with the accompanying drawings. Examples, however, may be embodied in many different forms and should not be constructed as being limited to example examples set forth herein. Rather, these examples are provided so that this disclosure will be complete and will fully convey the scope of the disclosure to those skilled in the art.

For purposes of this application and the claims, using the exemplary phrase "at least one of: A; B; or C" or "at least one of A, B, or C," the phrase means "at least one A, or at least one B, or at least one C, or any combination of at least one A, at least one B, and at least one C. Further, exemplary phrases, such as "A, B, or C", "at least one of A, B, and C", "at least one of A, B, or C", etc. as used herein may mean each listed item or all combinations of the listed items. For example, "at least one of A or B" may refer to (1) at least one A; (2) at least one B; or (3) at least one A and at least one B.

The term "module" or "unit" used in the specification means a software and/or hardware component, and the "module" or "unit" performs certain operations/functions/roles. However, the "module" or "unit" is not construed as being limited to software or hardware. The "module" or "unit" may be configured to be in an addressable storage medium or to execute one or more processors. Therefore, as an example, the "module" or "unit" may include at least one of components such as software components, object-oriented software components, class components, and task components, processes, functions, attributes, procedures, sub-routines, segments of program codes, drivers, firmware, micro-codes, circuits, data, databases, data structures, tables, arrays, or variables. Functions provided in the components, "modules", or "units" may be combined into a smaller number of components, "modules", or "units" or further divided into additional components, "modules", or "units".

In the present disclosure, the "module" or "unit" may be realized as a processor and a memory. The "processor" should be widely construed to include a general-purpose processor, a central processing unit (CPU), a microprocessor, a digital signal processor (DSP), a microcontroller, a state machine, or the like. In some environments, the "processor" may refer to an application-specific integrated circuit (ASIC), a programmable logic device (PLD), or a field-programmable gate array (FPGA), and the like. For example, the "processor" may refer to a combination of processing devices such as a combination of a DSP and a microprocessor, a combination of a plurality of microprocessors, a combination of one or more microprocessors combined with a DSP core, or any other such combination. Moreover, the "memory" should be widely construed to include any electronic component capable of storing electronic information. The "memory" may refer to various types of processor-readable medium such as a random access memory (RAM), a read only memory (ROM), a non-volatile random access memory (NVRAM), a programmable read only memory (PROM), an erasable programmable read only memory (EPROM), an electrically erasable programmable read only memory (EEPROM), a flash memory, a magnetic or optical data storage device, and registers. When the processor can read information from a memory and/or record the information in the memory, the memory may be in a state of electronic communication with a processor. Memory integrated into a processor is in a state of electronic communication with the processor.

The one or more features described herein may be provided as a computer program stored in a computer-readable recording medium to be executed on a computer. The medium may either continuously store a computer-executable program or temporarily store the program for execution or download. Furthermore, the medium may be a variety of recording or storage means in the form of a single hardware device or multiple combined hardware devices and is not limited to media directly connected to some computer system but may also be distributed across a network. Examples of such media include magnetic media such as a hard disk, a floppy disk, or a magnetic tape, optical recording media such as a CD-ROM or a DVD, magnetooptical media such as a floptical disk, and a ROM, RAM, or flash memory, among others, configured to store program instructions. Additional examples of such media include media or storage media that are managed by an app store that distributes applications or by various other sites or servers that provide or distribute software.

In a hardware implementation, processing units used for performing the techniques may be implemented within one or more ASICs, DSPs, digital signal processing devices, programmable logic devices, field-programmable gate arrays, processors, controllers, microcontrollers, microprocessors, electronic devices, or computers or combinations thereof designed to perform the functions described in the present disclosure.

An automation level of an autonomous driving vehicle may be classified as follows, according to the American Society of Automotive Engineers (SAE). At autonomous driving level 0, the SAE classification standard may correspond to "no automation," in which an autonomous driving system is temporarily involved in emergency situations (e.g., automatic emergency braking) and/or provides warnings only (e.g., blind spot warning, lane departure warning, etc.), and a driver is expected to operate the vehicle. At autonomous driving level 1, the SAE classification standard may correspond to "driver assistance," in which the system performs some driving functions (e.g., steering, acceleration, brake, lane centering, adaptive cruise control, etc.) while the driver operates the vehicle in a normal operation section, and the driver is expected to determine an operation state and/or timing of the system, perform other driving functions, and cope with (e.g., resolve) emergency situations. At autonomous driving level 2, the SAE classification standard may correspond to "partial automation," in which the system performs steering, acceleration, and/or braking under the supervision of the driver, and the driver is expected to determine an operation state and/or timing of the system, perform other driving functions, and cope with (e.g., resolve) emergency situations. At autonomous driving level 3, the SAE classification standard may correspond to "conditional automation," in which the system drives the vehicle (e.g., performs driving functions such as steering, acceleration, and/or braking) under limited conditions but transfer driving control to the driver when the required conditions are not met, and the driver is expected to determine an operation state and/or timing of the system, and take over control in emergency situations but do not otherwise operate the vehicle (e.g., steer, accelerate, and/or brake). At autonomous driving level 4, the SAE classification standard may correspond to "high automation," in which the system performs all driving functions, and the driver is expected to take control of the vehicle only in emergency situations. At autonomous driving level 5, the SAE classification standard may correspond to "full automation," in which the system performs full driving functions without any aid from the driver including in emergency situations, and the driver is not expected to perform any driving functions other than determining the operating state of the system. Although the present disclosure may apply the SAE classification standard for autonomous driving classification, other classification methods and/or algorithms may be used in one or more configurations described herein.

One or more features associated with autonomous driving control may be activated based on configured autonomous driving control setting(s) (e.g., based on at least one of: an autonomous driving classification, a selection of an autonomous driving level for a vehicle, etc.). Based on the feature of image-derived lanes mapped to radar tracks for per-lane closest-track selection (e.g., identifying the closest vehicle ahead in the host lane, detecting a fast-approaching motorcycle in an adjacent lane, or confirming that no object exists in a merging lane), the processor may adjust autonomous driving parameters. For example, lane-specific closest-track information may be used to modify braking timing, adjust acceleration, trigger lane-change readiness alerts, or control forward-collision-warning thresholds. The vehicle control may include various operational controls associated with the vehicle (e.g., autonomous driving control, sensor control, braking control, braking time control, acceleration control, acceleration change rate control, alarm timing control, forward collision warning time control, etc.).

One or more auxiliary devices (e.g., engine brake, exhaust brake, hydraulic retarder, electric retarder, regenerative brake, etc.) may also be controlled based on the feature of image-derived lanes mapped to radar tracks for per-lane closest-track selection. For example, when the per-lane closest track indicates a slow vehicle directly ahead, the processor may increase engine-brake strength; when a fast-approaching object is detected in an adjacent lane, the system may reduce regenerative-braking aggressiveness to maintain stability; or when no object is present in the host lane, auxiliary braking may be relaxed for smoother cruising.

One or more communication devices (e.g., a modem, a network adapter, a radio transceiver, an antenna, etc., that is capable of communicating via Ethernet, Wi-Fi, NFC, Bluetooth, LTE, 5G NR, V2X, etc.) may also be controlled based on the feature of image-derived lanes mapped to radar tracks for per-lane closest-track selection. For example, when a closest track in the host lane indicates heavy congestion, the V2X transceiver may increase its broadcast rate for hazard sharing; when an object in an adjacent lane is flagged as high-risk, the modem may activate priority uplink reporting; or when no relevant tracks are detected, the communication module may reduce channel usage to conserve power.

Minimum risk maneuver (MRM) operation(s) may also be controlled based on the feature of image-derived lanes mapped to radar tracks for per-lane closest-track selection. For example, if the closest track in the host lane indicates a rapidly slowing vehicle, the processor may initiate an MRM by reducing speed and steering toward a valid adjacent lane with no closest-track detected; if all surrounding lanes show occupied closest-tracks, the MRM may hold the vehicle within the current lane and apply controlled braking; or if the mapping indicates no valid surrounding lanes due to road boundaries, the vehicle may execute a straight-line controlled stop. During the MRM, one or more processors of the vehicle may control a driving operation of the vehicle for a set period of time.

Biased driving operation(s) may also be controlled based on the feature of image-derived lanes mapped to radar tracks for per-lane closest-track selection. For example, when the per-lane closest-track logic determines that an adjacent-lane vehicle is consistently closer to the host vehicle's right-side lane line, the driving control apparatus may bias the host vehicle slightly toward the left side of its lane to maintain a safer lateral margin. Likewise, if radar-based closest-track selection indicates dense traffic on one side of the lane, the processor may apply a biased target lateral distance that shifts the vehicle away from that side while keeping the vehicle within the image-derived lane boundaries.

One or more sensors used for autonomous-driving control may be controlled based on the feature of image-derived lanes mapped to radar tracks for per-lane closest-track selection. For example, when the per-lane closest-track selection identifies a closest radar track associated with a fast-approaching object in a left surrounding lane, a processor of the vehicle may increase a sampling rate of a left-facing radar sensor or a left-facing blind-spot monitoring sensor while reducing sampling of a sensor on an opposite side. In another example, when image-derived lane boundaries indicate reduced visibility on one side due to occlusion, the processor may activate a higher-resolution capture mode of an image sensor on that side or may temporarily activate a LiDAR sensor to refine lane-line estimation and improve the per-lane closest-track selection.

An autonomous-driving level and autonomous-driving activation or deactivation may be controlled based on the feature of image-derived lanes mapped to radar tracks for per-lane closest-track selection. For example, when the per-lane closest-track selection identifies that a closest track in a surrounding lane is unstable (e.g., a low-confidence radar track drifting across lane boundaries), a processor of the vehicle may downgrade the autonomous-driving level or require higher driver attentiveness, such as more frequent steering-wheel touch confirmations or forward-gaze checks. In another example, when the mapped lane data indicates an absence of any valid surrounding lane-such as when road boundaries are detected on both sides-the processor may deactivate autonomous driving to prevent unsafe lane-change behavior. Conversely, when each lane has a stable closest track and consistent lane boundaries, the processor may maintain or upgrade the autonomous-driving level and may permit display of certain media content that is restricted at lower autonomy levels.

In the present disclosure, expressions of location relations used in the present specification such as "upper", "lower", "left" and "right" are employed for the convenience of explanation, and in case drawings shown in the present specification are inversed, the location relations described in the specification may be inversely understood.

According to the present disclosure, a vehicle or an external server (or both) processes camera data and radar data to determine lane information and track nearby objects reliably. The camera data may be used to detect a driving lane line and a surrounding lane line, and when a lane line is not visible, a virtual lane line may be generated at a position inferred from the roadway to maintain a reasonable lane width. The radar data may be used to generate a plurality of tracks for detected objects, and each track may be associated with one of the driving lane or the surrounding lane by checking how representative points of the track align with lane boundaries identified from the camera data. Criteria for associating a track with a lane may be adapted based on an object's size or behavior. For each of the driving lane and the surrounding lane, a reliable closest track may be selected while ignoring low-confidence or unstable tracks. By performing these operations, a processing circuit supports consistent lane identification and robust tracking of nearby objects, enabling safer autonomous-driving control. Hereinafter, examples of the present disclosure will be described with reference to the accompanying drawings.

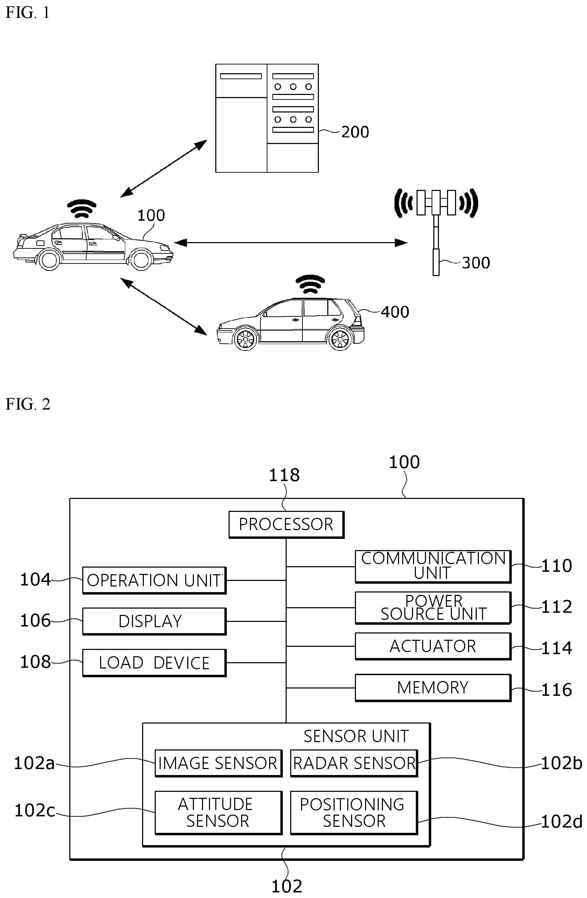

Hereinafter, a vehicle for processing a sensor track will be described with reference to FIGS. 1 to 3.

FIG. 1 shows an example of a vehicle communicating with another device to transmit and receive data.

Referring to FIG. 1, the vehicle 100 may be driven by electric energy or fossil energy. In the case of electric energy, the vehicle 100 may employ, for example, a pure battery-based vehicle driven only by a high-voltage battery or a gas-based fuel cell as an energy source. In addition, fuel cells may utilize various forms of gas to generate electrical energy, and the gas may be filled into the vehicle (100) in a liquefied state, for example. Here, the gas can be hydrogen, as an example. However, various gases are applicable without being limited thereto (e.g., hydrogen, ammonia, methane, or propane, etc.). In the case fossil energy, the vehicle 100 is driven by fuel such as gasoline, diesel, or liquefied gas, and may be equipped with an internal combustion engine that drives an actuator 114 by combustion of the fuel. The engine may be included in the power source unit 112 from the viewpoint of providing the driving rotational force of the wheel. Yet another example, the vehicle 100 may drive the actuator 114 by selectively utilizing energy from a fossil fuel-based internal combustion engine and an electric battery, and may be a hybrid type vehicle (e.g., a mild hybrid, plug-in hybrid, or series-parallel hybrid, etc.).

The vehicle 100 may refer to a device that can move. The vehicle 100 is a ground vehicle that drives on the ground, and may be a normal passenger or commercial vehicle, a Purpose-Built Vehicle (PBV), or the like (e.g., a delivery robot, shuttle platform, or cargo mobility unit, etc.). The vehicle 100 may be a four-wheeled vehicle, such as a passenger car, an SUV, a small truck, or may be a vehicle with more than four wheels, such as a bus, a large truck, a container carrying vehicle, a heavy-duty vehicle, or the like. The vehicle 100 may be a robot in a broad sense, such as a moving means, and the robot may be moved using wheels, tracks, or other moving modules (e.g., articulated tracks, omni-wheels, or robotic legs, etc.).

The vehicle 100 may be controlled to be driven by manual driving due to the driving of the user or autonomous driving. The autonomous driving may be implemented as semi-autonomous driving or fully autonomous driving. The fully autonomous driving may be provided as autonomous driving **in** which the processor 120 of the vehicle 100 completely controls the driving without user intervention even when the driving situation is uncertain. The semi-autonomous driving may be provided **in** autonomous movement **in** which driver intervention is required according to a specific driving situation (e.g., poor weather, unclear lane markings, or traffic-merge scenarios, etc.). The semi-autonomous driving may be implemented **in** such a manner that the processor 120 switches the control to the user while deactivating the autonomous driving when the above situation occurs, thereby causing the user to perform the manual driving. According to the level of autonomous driving defined by the American Society of Automotive Engineers (SAE), the semi-autonomous driving may correspond to the autonomous driving levels 1 to 4, and the fully autonomous driving may correspond to level 5.

The vehicle 100 may perform communication with the other devices 200, 300 or the other vehicle 400. The other devices may include, for example, the server 200 that supports various controls, state management, and driving of the vehicle 100, the ITS device 300 for receiving information from the Intelligent Transportation System (ITS), various types of user devices, and the like (e.g., smartphones, tablets, or wearable devices, etc.). The server 200 is, for example, an external device operated by a vehicle manufacturer or provided to service a driving support function and may receive connected data of the vehicle 100 or transmit data necessary for manual and autonomous driving. The server 200 may transmit various information and software modules used for controlling the vehicle 100 to the vehicle 100 in response to requests and data transmitted from the vehicle 100 and a user device, in order to support driving and various services of the vehicle 100.

The ITS device 300 is, for example, a Road Side Unit (RSU), and the ITS device 300 may interchange vehicle recognition data, driving control and state data, environmental data around the vehicle, map data, and the like through V2I with the vehicle 100 to assist the user in driving the own vehicle or support autonomous driving of the vehicle 100. The vehicle 100 may interchange the above-listed data through V2V with the other vehicle 400 to support manual driving or autonomous driving (e.g., cooperative lane-change, collision-avoidance, or platooning, etc.).

The vehicle 100 may communicate with other vehicles or other devices based on cellular communication, Wireless Access in Vehicular Environment (WAVE) communication, Dedicated Short Range Communication (DSRC) or near field communication, or other communication schemes.

For example, for the vehicle 100 to communicate with the server 200, the ITS device 300, and the other vehicle 400, a communication network such as LTE or 5G, Wi-Fi communication network, WAVE, or the like may be used as a cellular communication network (e.g., LTE-V2X, 5G-NR-V2X, or Wi-Fi 6E-based V2X, etc.). For another example, DSRC or the like used in the vehicle 100 may also be used for communication between vehicles. A communication manner between the vehicle 100, the server 200, ITS device 300 and another vehicle 400, and a user device is not limited to the foregoing example.

FIG. 2 shows an example of modules constituting a vehicle according to an example of the present disclosure.

The vehicle 100 may include a sensor unit 102, an operation unit 104, a display 106, a load device 108, and a communication unit 110.

The sensor unit 102 may include various types of sensors for sensing various states and situations occurring in an external surrounding environment, an internal system, a user control, and a boarding space of the vehicle 100 (e.g., cabin-temperature sensing, occupant monitoring, or cargo monitoring, etc.).

Specifically, the sensor unit 102 may include an externally oriented image sensor 102a, a radar sensor 102b, and the like so as to recognize dynamic and static objects existing around the vehicle 100 (e.g., other vehicles, pedestrians, bicycles, or road signs, etc.).

The image sensor 102a may recognize an external object as an image during use of the vehicle 100 to generate image data and transmit the image data to the processor 120. At least one image sensor 102a may be mounted on a specific site of the vehicle 100, for example, a front site, a rear site, or a side site of the vehicle 100. When a plurality of image sensors 102a are mounted on each site, it may be referred to as a multi-camera in the present disclosure. The image data obtained by the plurality of image sensors 102a may be referred to a multi-view image data. Although not shown, the sensor unit 102 may further include a camera facing an interior of the vehicle 100 (e.g., a driver-monitoring camera or a cabin-surveillance camera, etc.).

The radar sensor 102b may emit radio waves of a specific frequency around the vehicle 100 to generate radar data through radio waves reflected from an external object in order to grasp the presence and relative distance, speed, direction, and the like of the external object (e.g., approaching vehicles, stationary barriers, or roadside structures, etc.). In the present disclosure, the radar sensor 102b recognizes an object in a manner different from that of the image sensor 102a, and may be a type of heterogeneous sensor different from the image sensor 102a (e.g., FMCW radar, pulse radar, or phased-array radar, etc.).

In the present disclosure, it is shown that a LiDAR sensor (not shown) is not mounted, but in other examples, the LiDAR sensor may be mounted on the vehicle 100. The LiDAR sensor may generate point cloud data as recognized data of an external object and transmit the point cloud data to the processor in order to generate three-dimensional spatial information identifying at least a shape of the external object (e.g., point-cloud-based contour, volume estimation, or obstacle height, etc.). The LiDAR sensor may be a type of heterogeneous sensor different from the image sensor 102a.

The sensor unit 102 may include an attitude sensor 104c. The attitude sensor 104c may detect, for example, states of three axes of the vehicle 100, such as yaw, pitch, and roll, and output various attitude states of the vehicle based on the above-described factors. The attitude sensor may include, for example, an IMU sensor, a gyro sensor, and the like (e.g., a 6-axis IMU, a 9-axis IMU, or a MEMS gyroscope, etc.). The processor 120 may generate attitude data based on the attitude state.

In addition, the sensor unit 102 may include a positioning sensor 104d for confirming the location of the vehicle 100. The positioning sensor 104d is, for example, but not limited to, a GPS sensor or a GNSS sensor (e.g., dual-frequency GNSS, RTK-GNSS, or SBAS-supported positioning, etc.).

In addition, although not shown in FIG. 1, the sensor unit 102 may include a brake sensor and a wheel sensor. The brake sensor detects a braking degree of the brake, and the wheel sensor may detect, for example, a wheel speed, a wheel rotation angle, and a wheel rotation angular speed of the wheel (e.g., via Hall sensors, optical encoders, or ABS wheel-speed sensors, etc.). The present disclosure mainly describes the sensors of the sensor unit 102 referred to in the description of the example, and may further include sensors that sense various situations not listed therein (e.g., rain sensors, ultrasonic sensors, or ambient-light sensors, etc.).

The operation unit 104 may be configured as a module for a user to steer for driving. For example, the operation unit 104 can be a steering wheel for manual driving, an automatic or manual transmission actuator, an accelerator pedal, a brake pedal, a gear transmission, or the like (e.g., paddle shifters, joystick-type controls, or haptic-feedback pedals, etc.). The operation unit 104 may further include an interface for using, releasing, and selecting a detailed function of an autonomous driving mode requested by the user, such that the user uses the autonomous driving function. The operation unit 104 may be configured as, for example, a hard-type interface provided at a predetermined location inside the vehicle 100 or a soft-type interface touchable on the display 106, so as to receive various requests related to autonomous driving.

The display 106 may function as a user interface. The display 106 may be controlled by the processor 118 to output a control state, a control state, route/traffic information, remaining energy information, content requested by the driver, and the like of the vehicle 100 (e.g., navigation guidance, ADAS alerts, or infotainment content, etc.). In addition, the display 106 may be configured as a touch screen capable of detecting a driver input, to receive a request from the driver instructing the processor 118.

The communication unit 110 may support mutual communication with the server 200, the ITS device 300, the surrounding vehicle 400, and the like. The communication unit 110, for example, may include a module that processes cellular communication, WAVE, DSRC communication, and the like (e.g., LTE-V2X, 5G-V2X, or Wi-Fi 6E, etc.). In the present disclosure, the transmission/reception unit 116 may transmit data generated or stored during driving to the server 200 in the form of a signal and receive data and a software module transmitted from the server 200 in a specific type of signal.

The communication unit 110 may support communication for transmitting or receiving signals related to data, control, instructions, and requests between the components in FIG. 2. The components may be devices or modules referred to as reference numerals 102 to 118 shown in FIG. 2. The communication unit 110 may transmit signals transmitted between the components, that is, signals related to the data, the control, the instructions, and the requests, to a communication bus by using Controller Area Network (CAN) communication, for example, and transmit the signals to a specific component. The data, the control, the instructions, and the requests transmitted in the CAN communication may be referred to as CAN data (e.g., control commands, diagnostic messages, or status updates, etc.).

The communication unit 110 may also support communication with an electronic device carried by an occupant inside the vehicle 100 (e.g., smartphone, smartwatch, or tablet, etc.). In the present disclosure, the vehicle 100 may transmit and receive data utilized in the method according to the present disclosure to and from the outside through the communication unit 110.

The vehicle 100 may also include a power source unit 112 and an actuator 114.

The power source unit 112 may generate and supply power and electric power to be used for a driving power system and a non-driving power system, such as the actuator 114. The non-driving power system may be, for example, the sensor unit 102, the operation unit 104, the display 106, the load device 108, the communication unit 110, and the like, and is not limited thereto, and may include various components implementing sensing, interface, communication, and convenience functions except for components directly involved in a driving operation (e.g., climate control, interior lighting, or infotainment systems, etc.).

When the vehicle 100 is driven on an electrical energy basis, the power source unit 112 may be configured with, for example, an electrical battery that is charged from the outside, or may be configured with a combination of an electrical battery and a fuel cell that charges the battery (e.g., lithium-ion battery, solid-state battery, or PEM fuel cell, etc.). In the case of a combination of the electrical battery and the fuel cell, the power source unit 112 may include a tank that stores a material used to produce electric power of the fuel cell, such as liquefied hydrogen. When the vehicle 100 is driven on a fossil energy basis, the electric power source unit 112 may be configured with an internal combustion engine (e.g., gasoline, diesel, or LPG engine, etc.). In addition, when the vehicle 100 is of a hybrid type, the power source unit 112 may be provided by a combination of the internal combustion engine and the electrical battery.

The actuator 114 includes at least one module that implements a driving operation and may execute the driving operation based on a user request from the operation unit 104 or a signal according to a request of the processor 118. The signal according to the request may be related to, for example, at least one of a longitudinal control such as acceleration and deceleration, a lateral control such as steering, and a gear shift (e.g., upshifting, downshifting, or automated parking-gear engagement, etc.). Here, the gear shift may be processed by a request of a manual driving user using a gear transmission or the processor 118 in autonomous driving.

The actuator 114 may include a wheel driving unit, a mechanical component for implementing a driving operation on the wheel driving unit, and an electronic module to perform a driving operation according to an instruction of the processor 118 by a user's manual control or autonomous driving (e.g., electric motor control, hydraulic modulation, or drive-by-wire execution, etc.). When the vehicle 100 is operated based on electric energy, the actuator 114 may also include an assembly for transmitting a requested driving operation to the wheel driving unit 118 (e.g., an inverter, reducer, or e-axle assembly, etc.). When the vehicle 100 is operated based on fossil energy, the actuator 114 may include a transmission and a gear module for transmitting power of an internal combustion engine.

The wheel driving unit may include a plurality of wheels, a driving force generation module for generating a driving force and applying or transmitting the driving force to the wheels, a braking module for decelerating driving of the wheels, and a steering module for realizing lateral control of the wheels (e.g., rack-and-pinion steering, electric power steering, or four-wheel steering, etc.). When the vehicle 100 is driven based on electric energy, the driving force generation module may be configured as a motor assembly that generates a driving force based on electric power output from an electric battery (e.g., PMSM motor, induction motor, or hub motor, etc.). When the vehicle is driven based on fossil energy, the driving power generation module may be an engine or a transmission assembly. The braking module of the electric-based vehicle 100 may further have a regenerative braking function (e.g., blended braking or one-pedal deceleration, etc.).

The vehicle 100 may also include a memory 116 and a processor 118.

The memory 116 may store an application for controlling the vehicle 100 and various data and load the application or read and write the data at the request of the processor 118. In the present disclosure, the memory 116 may include an example according to the present disclosure, i.e., an application that tracks radar object data associated with an object detected from the radar sensor 102b (e.g., object history, motion prediction, or confidence scoring, etc.).

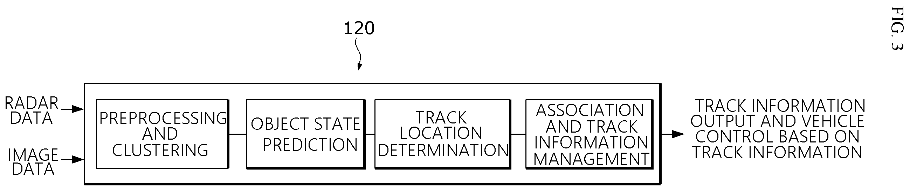

The radar object data may include a track based on point cloud data obtained by the radar sensor 102b. The track may be generated for use in estimating a trajectory of an object. For example, the track may be provided as a region formed by a boundary surrounding an object identified from the point cloud data, to obtain a location along the object trajectory (e.g., vehicle outline, pedestrian contour, or bicycle shape, etc.). In the present disclosure, the track may also be interchangeably described with the track region or the radar track, for distinguishing from other terms. The track is included in track information, and in the present disclosure, track information may also be interchangeably described with the radar track information, for distinguishing between other terms. The radar track information may include, for example, a track region, a track identifier, a location of an object, a speed of the object, a heading angle of the object, a type (or class) of the object and a reliability of the object estimation, the track maintenance count, and the like (e.g., object acceleration, turn-rate, or confidence index, etc.). The track maintenance count may mean, for example, the number of times that an existing track estimated to be the same as a newly acquired track in association and track information management in FIG. 3 is updated with track information of the new track such that the existing track is maintained without being lost (e.g., frame-to-frame persistence or continuity scoring, etc.).

The application may include a process of performing specific processing on point cloud data to generate a new radar track, and predicting a state of an object based on radar track information of a preceding radar track that has been previously generated (e.g., predicting future location, velocity trend, or heading drift, etc.). The application may also include a process of determining a location of the new radar track, specifically, a lane in which the radar track is located. The application may select a radar track that is closest to the vehicle 100 for each lane in the determination of the lane. The application may include the process of associating tracks by identifying an identity between a new radar track including the closest radar track and an existing track by using a result of the prediction process and an association condition between the tracks (e.g., minimum-distance matching, motion-pattern matching, or Hungarian-algorithm assignment, etc.). The application may further include the process of newly assigning a track identifier, or maintaining or deleting a track, according to a result of the association process.

In addition, the application may include a process of fusing the image object data detected from the image sensor 102a with the radar object data during the association process. The fused object data, i.e., the fused track, may be used for the association process, and the track information used for managing the track information may be provided based on the fused track (e.g., improved object classification, refined bounding shape, or corrected heading angle, etc.).

The processor 118 may perform overall control of the vehicle 100. The processor 118 may be configured to execute an application and an instruction stored in the memory 116. The processor 118 may generate signals related to control for components of the vehicle 100 in accordance with driving control requests in manual driving and autonomous driving. The components may be at least one of the various members described in FIG. 2. The processor 118 may include, for example, at least one of a Central Processing Unit (CPU), a Graphical Processing Unit (GPU), and a Neural Processing Unit (NPU). The processor 118 may function as a controller in another example. The controller includes the above processing unit, cache memory, bus interface, and the like, and may be, for example, an Electric Control Unit (ECU) (e.g., ADAS ECU, body control ECU, or powertrain ECU, etc.).

The processor 118 may execute various processing related to radar object data for track tracking in accordance with the present disclosure.

Referring to FIG. 3, a processor 118 that processes positioning of a radar track and tracking of the track obtained from the radar sensor 102b will be described. FIG. 3 shows an example of object recognition. For convenience of description, the present disclosure omits fusion of image tracks of image object data and describes management of association and track information by the radar track. The association and track information management based on the fusion track in which the image track and the radar track are fused may be like the following description unless technically contradictory.

The processor 118 of the vehicle 100 may process pre-processing of radar data, e.g., point cloud data, acquired from the radar sensor 102b and clustering of the data. Here, the radar data is exemplified as point cloud data but may also refer to tracks and track information in the present disclosure. The pre-processing may include, for example, filtering to remove noise and outliers in the point cloud data, spatial transformation of tracks identified by clustering of the filtered point cloud data, synchronization with other sensor data, and the like (e.g., timestamp alignment, coordinate-frame conversion, or Doppler noise filtering, etc.). The spatial transformation may include, for instance, transforming spatial data (e.g., coordinates) of the tracks from a radar sensor coordinate system (e.g., polar coordinates based on the radar sensor) to a coordinate system of a certain perspective (e.g., world-space system, vehicle-centric coordinates, or BEV coordinate system, etc.). The synchronization may include, for example, synchronization processing between both sensors in terms of time and space of image data. Here, image data may be image object data having a type (e.g., class) and state (e.g., location, speed, etc.) of an object by object recognition, but may also mean image data in a raw state before object recognition in the present disclosure (e.g., raw camera frames, cropped regions, or feature-map outputs, etc.).

The clustering may include clustering the point cloud data to generate radar tracks based on a distribution state of the point cloud data and statistical data related to the distribution (e.g., density-based clustering, distance-threshold grouping, or motion-consistency grouping, etc.), and generating radar track information for each radar track. The radar tracks may be generated to represent objects estimated from the point cloud data (e.g., vehicles, pedestrians, cyclists, or roadside objects, etc.).

The processor 118 may include processing to predict the state of the object based on the previously generated radar track information of the preceding radar track. Hereinafter, the radar track and the radar track information may be abbreviated as a track for ease of description, unless confused with the track and track information associated with the image data. The state of the object may include a location, a speed, an acceleration, and the like estimated at a predetermined time after the preceding track (e.g., using motion continuity, temporal alignment, or kinematic constraints, etc.). The predetermined time may be, for example, a frame after the preceding track, or a frame at the time of obtaining the track generated in the pre-processing/clustering. The prediction of the object state may use a predetermined filter, for example, Kalman Filter, and may estimate the next prediction state based on the dynamic model (e.g., constant-velocity model, constant-acceleration model, or bicycle-kinematic model, etc.). In addition, the processor 118 may update the prediction state. Specifically, the processor 118 may correct the prediction state using, for example, an actual measurement or detection value obtained from the radar sensor 102b (e.g., range, angle, or Doppler velocity, etc.).

Referring to FIG. 3, the processor 118 may process track location determination, which includes determining in which of the driving lane and surrounding lanes the track of an object around the vehicle 100 is located and selecting a closest track for each lane to generate closest track information. The object is a dynamic object, and may include another vehicle, a cyclist, a pedestrian, and the like (e.g., motorcycles, scooters, or pets on the roadway, etc.). The driving lane is the lane in which the host vehicle 100 is driving, and the surrounding lanes are lanes around the driving lane, for example, lanes directly adjacent to the driving lane.

With respect to track location determination, the processor 118 may execute processing of determining a lane line defining a driving lane and surrounding lane lines defining surrounding lanes based on image data (e.g., lane markings, road edges, or virtual boundaries, etc.). The processor 118 may perform processing of determining a track lane of a track of an object recognized from a heterogeneous sensor different from the image sensor 102a, for example, the radar sensor 102b, as either the driving lane or the surrounding lanes. In addition, the processor 118 may execute processing of selecting a track closest to the vehicle 100 for each track lane and generating closest track information. Here, the closest track information may be a part of track information of objects around the vehicle 100. The closest track information includes substantially the same data as the data described in the radar track information, and may further have data indicating that the track is the closest track to be distinguished from other track information (e.g., nearest-range flag, priority index, or confidence tag, etc.).

The processor 118 may perform a process of correlating the state of the object predicted from the preceding track and the new track around the vehicle including the closest track to determine the identity between the preceding and new tracks. The association process may be performed by, for example, a distance between tracks, a gate (or window) of a particular size to determine the same object, a probabilistic association, or the like (e.g., Mahalanobis distance gating, nearest-neighbor matching, or JPDA-based association, etc.).

The processor 118 may include the process of newly assigning a track identifier, or maintaining or deleting a track, according to a result of the association process. If a newly detected object persists for a period of time, a new identifier may be assigned to the track. If the track is maintained, track information of the associated track may be reflected in an existing track and updated. If the target object disappears from the region of interest of the sensor unit 102, and the specific track does not match track information of the existing track for a period of times, the existing track may be deleted (e.g., after exceeding a disappearance threshold, time-to-live counter, or missed-detection limit, etc.).

The processor 118 may control the vehicle 100 based on track information output by processing association and management of tracks using track information including closest track information. For example, the processor 118 may control the autonomous driving of the vehicle 100 based on the track information. Specifically, the processor 118 may establish a driving route based on the track information and control the actuator 114 based on a control signal based on the driving route (e.g., initiating lane keeping, adjusting speed, or executing collision-avoidance maneuvers, etc.).

In another example, the image data utilized in track positioning may also be utilized for association and track information management. The processor 118 may, in association processing, fuse the image tracks and new radar tracks recognized in the image data into a common space, associate the image and radar tracks in the common space, and output fused track information. Fusion may be performed through matching of objects detected at each sensor 104a, 104b, association/projection of matched objects using the geometric parameters of each sensor 104a, 104b, and calibration of both track information (e.g., extrinsic calibration, intrinsic distortion correction, or temporal alignment, etc.). The fused track information may include at least substantially the same data as the radar track information. The processor 118 may use the fused track information to manage the track information and control the autonomous driving of the vehicle 100 based on the fused track information. For example, the processor 118 may establish the driving route based on the fused track information and control the actuator 114 based on the control signal according to the driving route.

The processor 118 is shown in the present disclosure as being configured as a single processing module. In another example, the processor 118 may be distributed to a plurality of processing modules, and the above processing may be executed by a distributed processing model (e.g., domain ECUs, zonal controllers, or cloud-assisted compute units, etc.).

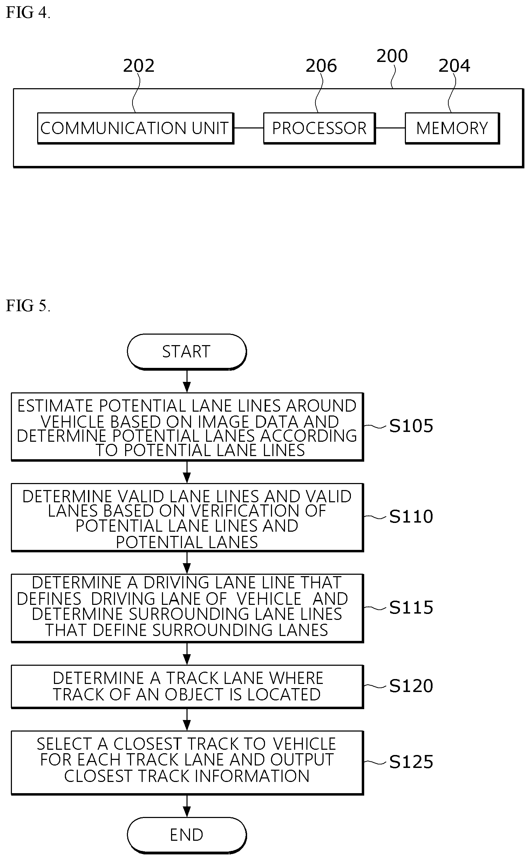

FIG. 4 shows an example of modules constituting a server according to the present disclosure.

The server 200 may transmit response data according to a request of the vehicle 100 to the vehicle 100 and may transmit an application built in the vehicle 100 and information for supporting vehicle driving to the vehicle 100. The server 200 may include a communication unit 202, a memory 204, and a processor 206.

The communication unit 202 transmits and receives data to and from an external device, supports mutual communication with the vehicle 100 in the present disclosure, and can exchange data with the vehicle 100 (e.g., control commands, map updates, or diagnostic information, etc.).

The memory 204 may store an application for operating the server 200 and various data and load the application or read and write the data according to a request of the processor 206. In the present disclosure, the memory 204 may manage data and software related to a model for processing a sensor track embedded in the vehicle 100, for example, a track based on the radar sensor 102b (e.g., prediction models, association parameters, or track-quality metrics, etc.).

The processor 206 may perform overall control of the server 200. The server 200 may be configured to execute an application and an instruction stored in the memory 204. The processor 206 executes the application to process and respond to a user's request transmitted from the vehicle 100 (e.g., providing route assistance, analyzing sensor data, or updating autonomous-driving parameters, etc.).

The processor 206 is shown in the present disclosure as being configured as a single processing module. In another example, the processor 206 may be distributed to a plurality of processing modules, and the above processing may be executed by a distributed processing model (e.g., cloud clusters, edge servers, or load-balanced compute nodes, etc.).

Hereinafter, a method of processing a sensor track according to another example of the present disclosure will be described in detail with reference to FIG. 5. FIG. 5 shows an example of a method for processing sensor tracks according to another example of the present disclosure. The method of the present disclosure is performed by the processor 118, but for convenience of description, the processor 118 and the vehicle 100 may be described interchangeably.

Referring to S105 of FIG. 5, the processor 118 of the vehicle 100 may estimate a potential lane line based on the image data detecting the surrounding environment of the vehicle 100 from the image sensor 102a, as well as determine a potential lane according to the potential lane line.

The image data may be generated to recognize dynamic objects and static objects in the surroundings of the vehicle 100. The recognized objects are arranged in a predefined space transformed from the space of the image data, wherein the predefined space may be, for example, a world coordinate system or a coordinate system from a bird's-eye perspective (e.g., BEV grid, road-level coordinate frame, or ego-vehicle-centric frame, etc.). Variable objects may include, for example, other vehicles, cyclists, pedestrians, etc. in the surroundings the vehicle 100 (e.g., motorcycles, scooters, or strollers, etc.). Static objects may include, e.g., roadway facility objects including traffic markers displayed on the roadway and roadway structures installed on/around the roadway (e.g., lane arrows, stop lines, or crosswalk markings, etc.).

The traffic indicators may include, for example, lane lines, speed limits, direction of driving indicators, etc. The road structures may include, for instance, roadway boundaries, road signs, guardrails, traffic cones, traffic rods, anti-collision barriers, etc. (e.g., curb stones, median barriers, or flexible delineator posts, etc.).

The road boundary may be, for example, an object indicating a road boundary for distinguishing a road area from a non-road area. That is, the road boundary may be used to distinguish the road area and the non-road area from each other. The non-road area is not allowed to be driven by a vehicle according to a preset criterion, and the criterion may be, for instance, a regulation, a request for prohibition of driving due to construction, or the like. However, when there is a special situation (for example, driving in the non-road areas to enter buildings around the road, or the like), driving in the non-road regions may be allowed. The road boundary may, for example, be a curb, a road structure provided between the road area and non-road areas, or a line according to the non-road region made of a material different from that of the road. The line may be detected by object recognition of image data without a separate road structure. The road structure used as the road boundary may, e.g., be a guardrail, a cone, a rod, a barrier, or the like (e.g., bollards, median fences, or reflective markers, etc.).

The processor 118 may estimate, based on the image data, lanes detected in a driving lane region in which the vehicle 100 moves and a surrounding lane region around the driving lane region as potential lanes. The driving lane region and the surrounding lane region may be estimated by inference processing of the image data (e.g., semantic segmentation, lane-line regression, or vanishing-point estimation, etc.). The driving lane region may be a region between lane lines that are observed to be closest to the vehicle 100 in front of the center as seen in the driving direction of the vehicle 100, a region up to a predetermined interval that extends in a lateral direction so that the vehicle 100 is interposed in one closest lane line that is observed, or a range that falls within a predetermined angle from the front of the center. The surrounding lane regions may be regions that are observed around the driving lane regions, and regions that are derived from lane lines that are viewed to be spaced apart from lane lines on at least one side that is closest to the vehicle 100. The driving lane regions and the surrounding lane regions are temporary driving lanes and temporary surrounding lanes, and in the present disclosure, for convenience of description, the driving lane regions and the surrounding lane regions may be described or used interchangeably as a driving lane and a surrounding lane, respectively.

As an example of an estimation of a potential lane line associated with a driving lane, if the processor 118 recognizes two lane lines adjacent to the vehicle 100 in the driving lane estimated from the image data, the processor 118 may identify the two driving perception lane lines as potential lane lines of the driving area. The processor 118 may determine the lanes defined by the two driving perception lane lines as potential lanes associated with the driving lane.

As another example of a potential lane line associated with a driving lane, the processor 118 may recognize the driving lane and one of a plurality of lane lines adjacent to the vehicle 100 to identify a driving perception lane line and, in response, generate a driving virtual lane line that is spaced transversely with respect to the driving perception lane line. For example, the driving virtual lane line may be generated to be spaced with a virtual width transversely with the driving perception lane line relative to the space in which the image data resides. The virtual width is a road width and may be dynamically varied to match the actual road on which the vehicle is driving. The virtual width may be, but is not limited to, 3-4 meters (e.g., widened on highways, narrowed in urban lanes, or expanded on multi-lane roads, etc.).

The driving virtual lane may be generated to have the same attribute information as the driving perceived lane line. The attribute information may include a shape of the driving perceived lane line, a perceived distance indicating a distance from the vehicle 100 to an ending point of the driving perceived lane line detected in the image data (e.g., far-field endpoint, horizon-line vanishing point, or a curve-end segment, etc.), and a perceived length indicating a length between a starting point and an ending point of the driving perceived lane line detected in the image data (e.g., visible lane-segment length or truncated lane-line length, etc.). The shape of the driving perceived lane line may be, for example, a straight line, a curve, a curvature, or the like, and the driving virtual lane line may also be generated to have a shape that is the same as the shape of the driving perceived lane line. The starting point of the lane line and the ending point of the lane line may not be the actual starting point and the ending point along the length direction of the actual lane line but may be the starting point and the ending point identified from the image data. In the image data, the starting point may be located closer to the vehicle 100 than the ending point.

Thereby, the processor 118 may employ the driving perceived lane line and the driving virtual lane line as potential lane lines. The processor 118 may determine a lane defined in the driving perceived lane line or the driving virtual lane line to be a potential lane associated with the driving lane.

As an example of the estimation of the potential lane line associated with the surrounding lane, if the processor 118 recognizes a lane line adjacent to the potential lane line of the driving lane in the surrounding lane estimated in the image data, the processor 118 may identify the perceived lane line as a surrounding perceived lane line and employ the surrounding perceived lane line as the potential lane line. The surrounding perceived lane line may include a lane line disposed on at least one of a left side and a right side of the driving lane (e.g., an adjacent traffic lane, a merging lane, or a passing lane, etc.). The processor 118 may determine the lane defined in the surrounding perceived lane line and the potential lane line in the driving lane as a potential lane associated with a surrounding lane.

As another example of a potential lane associated with a surrounding lane, if the processor 118 does not perceive a lane adjacent to a potential lane line of a driving lane in the surrounding lane estimated from the image data, the processor 118 may determine whether a width between a particular point of the surrounding perceived lane line associated with the surrounding lane and the potential lane line associated with the driving lane has been obtained from the image data. If the processor 118 did not perceive a continuous lane line adjacent to the vehicle 100 from the image data, the processor 118 may determine whether a discontinuous surrounding perceived lane line has been detected in the surrounding lane region. If a discontinuous surrounding perceived lane is detected, the processor 118 may estimate from the image data a width between the particular point of the discontinuous surrounding perceived lane line and the potential traffic lane line of the driving lane (e.g., using nearest detected fragment, detected segment endpoints, or estimated curb-edge pixels, etc.). The point may be, for example, a starting point and an ending point of the surrounding perceived lane line detected from the image data. The starting point and the ending point may be the same as the meaning described in the driving perceived lane line.

Once the width is estimated, the processor 118 may generate, based on the width, a surrounding virtual lane line having the same attribute information as the potential lane line of the driving lane. The attribute information may include, except for the width, a shape of the driving perceived lane line, a perceived distance indicating a distance from the vehicle 100 to an ending point of the driving perceived lane line detected in the image data, and a perceived length indicating a length between a starting point and an ending point of the driving perceived lane line detected in the image data. The surrounding virtual lane line may be generated to be the same as the shape of the potential lane line of a driving lane.

Accordingly, the processor 118 may employ the surrounding perceived lane line and the surrounding virtual lane line as potential lane lines of the surrounding lane. The processor 118 may determine the lane defined in the potential lane line of the driving lane and in the surrounding virtual lane line to be a potential lane associated with the surrounding lane.

In response to not obtaining the width, the processor 118 may determine whether a radar track having a track maintenance value equal to or greater than a predefined track maintenance count accumulated in time series from the preceding radar track exists in the surrounding lane. Here, the surrounding lane may be a surrounding lane region corresponding to a region observed around the driving lane region without recognition of the lane line. The track maintenance value (or the track maintenance count) may be data included in the radar track information described above. The predefined track maintenance count is a value at which the existence of the surrounding lane is guaranteed, and may be, for example, 20 (e.g., when consistent detections over time indicate a stable adjacent-lane object presence, etc.).

The processor 118 may generate a surrounding virtual lane line that is adjacent to the surrounding lane in which the track is maintained, and that is spaced transversely with respect to a potential lane line of the driving lane, in response to the track having a track maintenance value greater than or equal to the predefined track maintenance count being present in the surrounding lane. For example, the surrounding virtual lane line may be generated to be spaced to have a virtual width in a transverse direction from the driving perceived lane line toward the surrounding lane, on a spatial basis in which image data is present. The predetermined width is a road width and may be dynamically varied to match an actual road on which the vehicle is driving. The virtual width may be, but is not limited to, 3-4 meters (e.g., adjusted for narrower urban lanes or widened for highway segments, etc.). Accordingly, the processor 118 may employ the surrounding virtual lane line as the potential lane line. The processor 118 may determine the lane defined in the potential lane line of the driving lane and in the surrounding virtual lane line to be a potential lane associated with the surrounding lane.

In addition, the processor 118 may generate a preliminary virtual lane line that is laterally spaced relative to a potential lane line of the driving lane, in response to a track having a track maintenance value greater than or equal to the number of track maintenance count not being detected in the surrounding lane. The preliminary virtual lane line may be generated similarly to the surrounding virtual lane line, spaced to have a virtual width laterally toward the surrounding lane in the driving perceived lane (e.g., 3-4 m lateral offset, estimated adjacent-lane gap, or inferred curb-side spacing, etc.).

The processor 118 may employ the preliminary virtual lane line as the surrounding virtual lane line, in response to the presence of more than a predetermined number of objects, e.g., dynamic objects, obtained from the image data in the preliminary surrounding lane defined by the preliminary virtual lane line. The presence of the dynamic objects may be identified as other vehicles detected in the image track of the objects (e.g., a passenger vehicle, a motorcycle, a cyclist, or a pedestrian, etc.). The predetermined number is a value from which the presence of the surrounding lane is estimated, and may be, for example, two. Further, the processor 118 may determine the potential lane line of the driving lane and the lane defined in the surrounding virtual lane line as potential lanes associated with the surrounding lane.

As yet another example of a potential lane line associated with a surrounding lane, the processor 118 may determine from the image data that the surrounding perceived lane line associated with the surrounding lane has not been obtained, but that a road boundary in the vicinity of the surrounding lane has been reliably detected. The processor 118 may, in response to obtaining the road boundary from the image data, generate a width between the potential lane line associated with the driving lane and the road boundary (e.g., curb-edge distance, sidewalk-edge offset, or barrier-edge spacing, etc.).

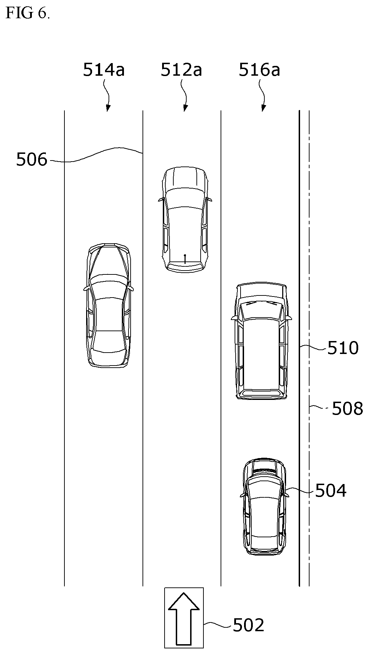

When the width is less than or equal to the threshold width, the processor 118 may generate a surrounding virtual lane line based on the road boundary and employ the surrounding virtual lane line as a potential lane line. In addition, the processor 118 may determine the potential lane line of the driving lane and the lane defined in the surrounding virtual lane line as potential lanes associated with the surrounding lane. The threshold width may be a typical width between the lane line and the road boundary but may be dynamically varied to match an actual road on which the vehicle is driving. The threshold width is shown as 3-5 m but is not limited thereto. The processor 118 may generate the surrounding virtual lane line at a location spaced by an offset distance from the road boundary toward the road (e.g., 0.3-1.0 m inward shift, adjusted curb-to-lane offset, or inferred shoulder margin, etc.). The offset distance may be set because the road boundary does not correspond to the actual lane. As shown in FIG. 6, when the road boundary 508 is detected, the processor 118 may generate the surrounding virtual lane line spaced by the offset distance to approximate a plausible adjacent-lane position. FIG. 6 shows an example of an example of lane line data generation.

If the width is greater than the threshold width, the processor 118 may generate a surrounding virtual lane line that is spaced a virtual width apart from the potential lane line of the driving lane and employ the surrounding virtual lane line as the potential lane line. If the width between the potential lane line associated with the driving lane and the road boundary excessively exceeds the typical road width, the actual surrounding lane line may be multiple (e.g., two adjacent lanes, a bus-only lane, or a high-occupancy lane, etc.). To obtain the surrounding lane line of the surrounding lane that is directly adjacent to the driving lane, the surrounding virtual lane line may be generated in a lateral direction toward the road boundary from the potential lane line in the surrounding lane. In addition, the processor 118 may determine the lane defined in the surrounding virtual lane line and the potential lane line in a driving lane as a potential lane associated with a surrounding lane.

In the present disclosure, the driving lane region and the surrounding lane region include front and rear regions of the vehicle 100, and the surrounding lane regions may be regions directly adjacent to the driving lane region. For example, the front driving lane region may be a host vehicle lane, and the front and rear surrounding lane regions may be a front left/right lane and a rear left/right lane (e.g., adjacent merging lanes or overtaking lanes, etc.).

According to the present disclosure, depending on the complexity of the road, the vehicle spacing, and the vehicle size, even if a lane line is obscured and not recognized in the image data, by generating a driving and surrounding virtual lane line, subsequent processes, such as lane line and lane determination, can be processed smoothly.

Referring to S110 of FIG. 5, the processor 118 of the vehicle 100 may determine a valid lane line and a valid lane based on the verification of the potential lane line and the potential lane.

Specifically for step S110, the processor 118 may determine a potential lane line, in which the perceived distance of the potential lane line falls within a predetermined range of distances and the perceived length of the potential lane line is greater than or equal to the predetermined length, as the valid lane line (e.g., when the lane line persists over a sufficient visible length or stays within a reliable detection range, etc.).

The potential lane line may include the perceived lane line estimated in step S105, and the virtual lane line generated in the step. In detail, the driving perceived lane line, the driving virtual lane line, the surrounding perceived lane line and the surrounding virtual lane line may be included in the potential lane line. The perceived distance may represent a distance of an ending point of the potential lane line detected in the image data (e.g., far-end segment, horizon-visible tip, or curve-end point, etc.), and the perceived length may represent a length between a starting point and an ending point of the potential lane line detected in the image data (e.g., visible lane-segment span or truncated detection interval, etc.). The starting point may be a potential suboptimal point detected closer to the ending point in the image data. The range to be compared with the perceived distance is, for example, greater than 0 m and less than or equal to 200 m but is not limited thereto. The predetermined length compared with the perceived length is, for example, but not limited to, 1 m (e.g., minimum visible segment required for stable lane inference, etc.).

FIG. 6 illustrates the determination of lane line data including valid lane lines. FIG. 6 also illustrates that the potential lane lines are driving perceived lane lines associated with the driving lane region of the vehicle 502 and surrounding perceived lane lines associated the surrounding lane region of the surrounding object 504. The processor 118 may determine whether the conditions associated with perceived distance and perceived length are met for each potential lane line and determine the met potential lane lines as valid lane lines 506 and 510.

In FIG. 6, the potential lane line adjacent to the surrounding lane region may be a surrounding virtual lane line that is generated at an offset distance from the road boundary 508. If the surrounding virtual lane line meets the conditions related to perceived distance and perceived length, the processor 118 may determine the surrounding virtual lane line as a valid lane line. If no surrounding perceived lane line adjacent to the road boundary 508 is detected, or no surrounding virtual lane line is generated at the road boundary 508, the processor 118 may determine that no valid lane line exists in the surrounding lane region. The processor 118 may thereby determine that the lane data includes a valid lane line and a road boundary (e.g., when the only reliable boundary cue in the region is a curb edge, guardrail, or solid roadside structure, etc.).

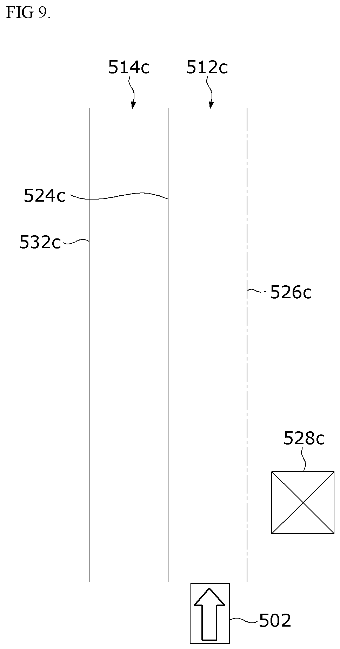

Also, unlike the example of FIG. 6, if a road boundary is perceived on one side of the driving lane region, but no driving-perceived lane line or driving virtual lane line is generated on one side of that region, the processor 118 may determine that no valid lane line exists on one side of a driving lane region, and that a valid lane line exists on the other side of that area. The processor 118 may thereby determine that the lane data includes a valid lane line and a road boundary. In addition, the processor 118 may generate indication data that no surrounding lane is adjacent to the road boundary, in response to the lane line data associated with the driving lane being determined to be a valid lane line and the road boundary. The indication data may be referred to as flag data. As shown in FIG. 9, if lane line data 526c on one side of driving lane region is generated by the road boundary 508, the processor 118 may generate indication data 528c that no surrounding lane exists adjacent to the road boundary 508 (e.g., ramp edge, elevated shoulder edge, or construction barrier edge, etc.).

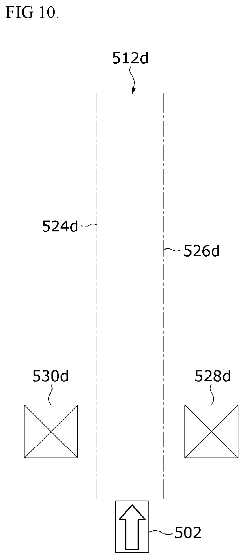

Further, unlike the example of FIG. 6, if a road boundary is perceived on both sides of the driving lane region, but no driving perceived lane line or driving virtual lane line is generated on both sides, the processor 118 may determine that the lane data includes two road boundaries. In addition, the processor 118 may generate indication data that no surrounding lanes are adjacent to both road boundaries. As shown in FIG. 10, if lane data 524d, 526d on both sides of a driving lane region is generated by the road boundary 508, the processor 118 may generate indication data 528d, 503d that no surrounding lane is adjacent to the road boundary 508.

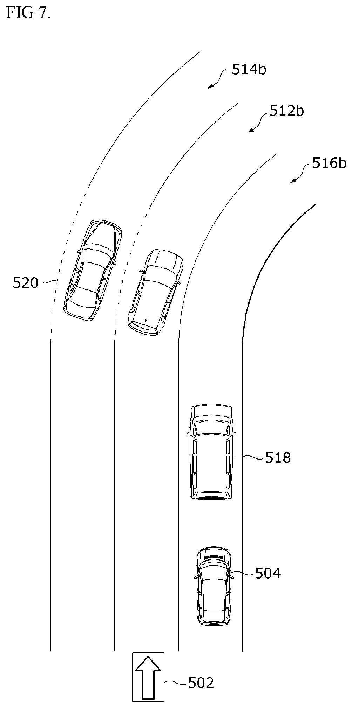

FIG. 7 shows an example of another example of lane line data generation. FIG. 7 illustrates that the potential lane lines are a driving perceived lane line associated with a driving lane region of the vehicle 502, a driving virtual lane line associated with the vehicle 502, a surrounding perceived lane line associated with a surrounding lane region of the surrounding object 504, and a driving virtual lane line associated with the surrounding object 504. As described in step S105, the driving virtual lane lines and the surrounding virtual lane lines 520 may be generated based on the driving perceived lanes, the surrounding perceived lane lines, and other potential lane lines, without using lane lines that are obscured due to the surrounding object 504 in the image data (e.g., large trucks blocking lane markers, buses blocking shoulder lines, or heavy traffic occlusions, etc.). The processor 118 may determine whether the conditions related to the perceived distance and the perceived length are satisfied for each potential lane line 520 and determine the satisfied potential lane lines 520 as valid lane lines 518.

If a road boundary is perceived in the surrounding lane region, but no surrounding perceived lane line or surrounding virtual lane line is generated in the region, the processor 118 may determine that no valid lane exists in the surrounding lane region. The processor 118 may thereby determine that the lane data includes a valid lane line and a road boundary.

The processor 118 may determine a potential lane as a valid lane that satisfies that the width of the potential lane between adjacent valid lanes 506, 510, 518 for each of the driving lane region and the surrounding lane region falls within a range of predetermined width. The range of predetermined width may be set to, for example, a range having a margin from the standard lane width (e.g., ±0.5 m around typical lane widths, highway-wide lanes, or narrowed urban lanes, etc.). The standard lane width may vary depending on the road on which the vehicle 502 drives. The range of predetermined width may be a tuning parameter including a margin from a typical lane width. The width may be set in view of a road having a width that narrows to a merging section, a tollgate, or a road having a breadth that widens to an expansion section (e.g., lane drops before tunnels, temporary construction widens, or multi-lane fan-outs, etc.). The range width is, for example, greater than or equal to 2 m and less than or equal to 5.5 m and is not limited thereto. With the determination of a valid lane, a driving lane region and a surrounding lane region may be considered as a valid driving lane and a valid surrounding lane.

As shown in FIGS. 6 and 7, if the width between valid lanes 506, 510, 518 is identified as falling within a range of predetermined widths, the processor 118 may determine potential lanes corresponding to the driving roadway region and the surrounding roadway region as valid lanes 512a, 512b, 514a, 514b, 516a, and 516b. The valid lanes 522a, 512b may be estimated as driving lanes and the valid lanes 514a, 514b, 516a, and 516b as surrounding lanes (e.g., adjacent traffic lanes, merging lanes, or overtaking lanes, etc.).

Referring to S115 of FIG. 5, the processor 118 may determine, based on the lane line data, a driving lane line defining a driving lane and a surrounding lane line defining a surrounding lane.

The lane line data may include at least one of the valid lane line and the road boundary described in step S110. In addition, the surrounding lane line adjacent to the driving lane line may be determined from the lane line data with reference to the instruction data (e.g., flag data indicating lane absence, obstruction, or non-drivable areas, etc.).

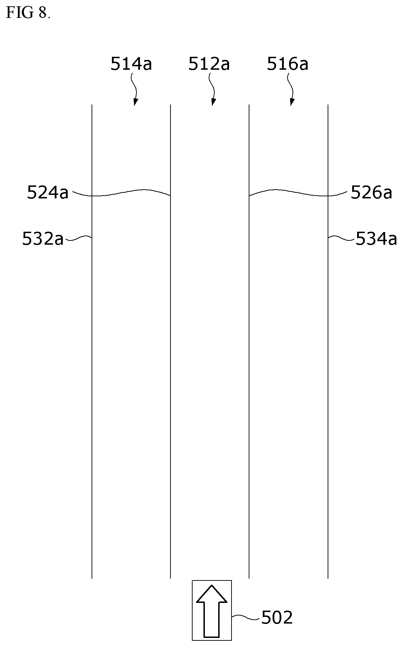

The determination of the driving lane line and the surrounding lane line may be explained by way of example in FIGS. 8 to 10.

FIG. 8 shows an example of determining a driving lane line and surrounding lane lines.

The processor 118 may determine the valid lane line to be the driving lane line 524a, 526a of the driving lane 512a in response to the valid lane line being present on both sides of the driving lanes 512a. The processor 118 may determine the valid lane line to be the surrounding lane line 532a, 534a of the surrounding lane 514a, 516a in response to the valid lane line being present on a side of each of the surrounding lanes 514a, 516a (e.g., left-adjacent lane or right-adjacent lane, etc.).

FIG. 9 shows an example of determining a driving lane line and surrounding lane lines.

The processor 118 may determine the valid lane line and the road boundary 508 as the driving lane lines 524c, 526c of the driving lane 512c in response to the valid lane line and a road boundary 508 (or a valid virtual driving lane line generated from the road boundary) being present on both sides of the driving lane 512c. The processor 118, with reference to the instruction data 528c, may identify that the surrounding lane is not present on the right side of the driving lane 512c and determine, from the lane line data, the surrounding lane line of the surrounding lane 514c that is disposed on the left side of the driving path 512c. Thereby, the valid lane line that is present on the right-side surrounding lane 514c may be determined as the surrounding lane 532c.

FIG. 10 shows an example of determining a driving lane line and surrounding lane lines.

The processor 118 may determine both road boundaries 508 as the driving lane lines 524d, 526d of the driving lane 512d in response to a road boundary 508 (or a valid virtual driving lane line based on the road boundary) being present on both sides of the driving lane 512d. The processor 118, with reference to the instruction data 528d, 530d, may identify that no surrounding lanes are present on both sides the driving lane 512d (e.g., narrow tunnels, elevated bridges, or construction-restricted corridors, etc.), and may not determine surrounding lane lines.

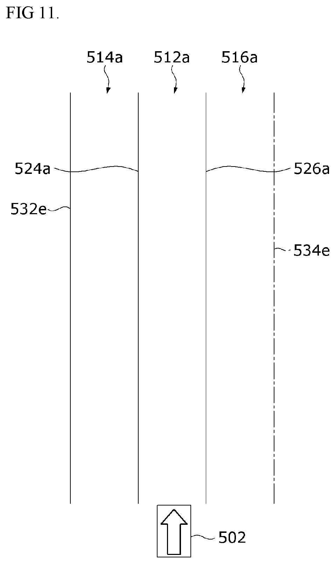

FIG. 11 shows an example of determining surrounding lane lines.

The processor 118 may determine valid lane lines that exist on both sides of the driving lane 512a as the driving lane lines 524a, 526a of the driving lane 512a. The processor 118 may determine the valid lane lines and the road boundary 508 as the surrounding lane lines 532e, 534e of the surrounding lane 514a,516a in response to the valid lane lines and the road boundary 508 (or valid surrounding virtual lane lines generated along the road boundary) existing laterally of each of the surrounding lanes 514a, 516a (e.g., left-adjacent lane, right-adjacent lane, or shoulder-adjacent lane, etc.).

Referring to S120 of FIG. 5, the processor 118 of the vehicle 100 may determine the track lane of the radar track of the nearby object to be either the driving lane or the surrounding lane.

The radar track, the driving lane, the surrounding lane, the driving lane line and the surrounding lane line are arranged in a common space, such that the process of S120 can be performed. The common space is, for example, but not limited to, a world coordinate system or a coordinate system viewed from a bird's-eye perspective (e.g., BEV grid map, global reference frame, or ego-centered map frame, etc.).

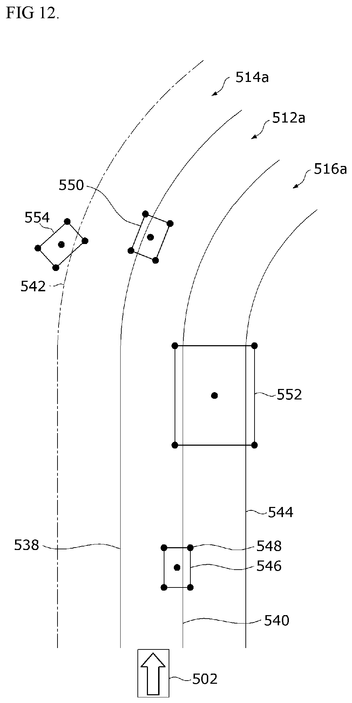

The track may be generated to estimate a trajectory of an object detected by the radar sensor 102b and may be formed as a boundary region surrounding the object, for example, to determine a location according to the object trajectory. As shown in FIG. 12, the tracks 546, 550, 552, and 554 may be represented as bounding boxes in a common space. FIG. 12 shows an example of the determination of a track lane. In addition, the processor 118 may select the tracks 546, 550, 552, and 554 located within a predetermined perceived distance from among the tracks (e.g., within 50 m, 80 m, or another configured sensor range, etc.), and utilize the selected tracks 546, 550, 552, and 554 in determination of the track lane. The position of the track may be, for example, a location along a longitudinal direction of the common space.

The processor 118 may correspond the tracks of the objects around the vehicle, and the lanes and the lane lines being defined from the image data, in a common space to determine the lane to which the track belongs as the track lane, among the driving lanes and the surrounding lanes identified in the image data. The lane lines may be described, for example, by a function representing them (e.g., polynomial curve, spline function, or piecewise linear model, etc.).

Specifically, the processor 118 may determine the track lane of the selected track according to a criterion set differently for each object behavior and object type (e.g., cars changing lanes, motorcycles weaving, or pedestrians crossing, etc.). The criterion may be defined as the number of track points 548 formed in the tracks 546, 550, 552, and 554 that belong to the track lane. The track points 548 may include a center point in the tracks 546, 550,552, and 554 and an outer point disposed at an outline boundary of the tracks 546, 550, 552, and 554, as shown in FIG. 12 (e.g., box corners, mid-edge points, or centroid points, etc.). The driving lane line and the surrounding lane line that define the driving lane and the surrounding lane, respectively, may be described as a function representing the lane line, for example. The processor 118 may identify the lane to which each track point 548 belongs among the lanes defined by the lane lines.

The processor 118 may determine the lane to which the track 546 belongs as the first number of track points 548 as the track lane of the track 546. The first number may be set to three. FIG. 12 shows that the processor 118 detects that the three track points 548 of the track 546 belong to the driving lane 512b and determines the track lane of a track 546 as the driving lane 512b.

The processor 118 may identify the behavior of the object through the track and determine the track lane according to criteria corresponding to the behavior (e.g., lane-change initiation, overtaking motion, or drifting across lane boundaries, etc.).

Referring to FIG. 12, which illustrates an example of the behavior, the processor 118 may determine the behavior of the object by identifying whether the current track 550 of the object whose track lane is estimated to be the same as the preceding track determined to be the surrounding lane 514b belongs to the driving lane 512b as a first number of track points. The processor 118 may, in response to the object's behavior associated with the current track 550 being identified as described above, determine whether the track points 548 of the current track 550 satisfy that they belong to the driving lane as a second number that is greater than the first number (e.g., four points instead of three, indicating deeper lane intrusion, etc.). The second number may be set to, for example, four.

The processor 118 may determine the track lane of the current track 550 as the driving lane 512b in response to the track points 548 of the current track 550 belonging to the second number of the driving lanes 512b. In FIG. 12, it is shown that the track point 548 of the current track 550 belongs to the driving lane 522b in a smaller number than the second number, and the track lane of current track 550 is determined as the surrounding lane 514b.

Due to lane line inaccuracies and lateral position errors of the sensor tracks on the curved road, the tracks of the surrounding lanes may encroach on the driving lane, causing errors in the determination of the track lane. Therefore, since the tracks of a driving lane are important information for driving control, by increasing the number of track points of the tracks entering the driving lane from the surrounding lane (e.g., requiring ≥ 4 points for lane-change confirmation, etc.), the track lane associated with the object in the surrounding lane may not be easily determined as the driving lane.

Referring to FIG. 12, which illustrates another example of the behavior, the processor 118 may determine the behavior of the object by identifying that the current track 554 of the object whose track lane is estimated to be the same as the preceding track determined to be the surrounding lane 514b belongs to the surrounding lane 514b with a number of track points 548 less than the first number (e.g., one point or two points, indicating slight deviation due to noise, etc.). The processor 118 may, in response to the behavior of the current track 554 of the object being identified as described above, determine whether the track points 548 of the current track 554 satisfy that they belong to the surrounding lanes 514b with a third number less than the first. The third number may be set to one, for example.

As shown in FIG. 12, the processor 118 may determine the track lane of the current track 554 as the surrounding lane 514b in response to that the track points 548 of the current track 554 belong to the surrounding lanes 514b in the third number.

Due to lane line inaccuracies and lateral position errors of the sensor tracks on curved roads, the tracks can be skewed out of the lane line. In this case, only about one or two track points belong to the surrounding lane, such that it may be difficult to determine the track lane with a basic criterion, e.g., the first number. Thus, when the behavior of the track skewing to the surrounding lane line is identified, the track lane can be accurately determined by a third number of track points that is lower than the first number (e.g., using one-point membership for noisy left/right shifts, etc.), which is the basic criterion.

The processor 118 may identify the type of the object through the track and determine the track lane according to criteria corresponding to the type.

Referring to FIG. 12, which illustrates the type, the processor 118 may determine the type of the object by identifying whether the size of the object estimated from the outer boundary of the track 552 is equal to or greater than a predetermined size (e.g., bus-sized objects, truck-length profiles, or wide trailer outlines, etc.). The object having the predetermined size or greater may be, for example, a large vehicle. The processor 118 may, in response to that the size of the objects is equal to or larger than the predetermined size, determine the track lane to be either the driving lane in which the center point of the track is located or the surrounding lane. FIG. 12 illustrates that the center point of a track 552 belongs to the surrounding lane 516b, and the track lane is determined to be the surrounding lane 516b.

A large vehicle may have difficulty in determining a track lane of the large vehicle because a track point obstructs its own lane while invading another lane due to its size. By determining the track lane as a lane in which a center point of a surrounding object of a predetermined size or larger is located, the track lane of the surrounding object of the large size can be easily and accurately determined.

Referring to S125 of FIG. 5, the processor 118 of the vehicle 100 may select a track closest to the vehicle 502 for each track lane and generate closest track information.

The processor 118 may select a closest track among the tracks except for the track having the exclusion condition for each track lane. The exclusion condition may include a first exclusion condition and a second exclusion condition.

The first exclusion condition may include a track having a track confidence less than a predetermined confidence (e.g., low-probability radar detections, weak class-identification scores, or unstable Doppler responses, etc.). The track confidence is data included in the track information and may include statistical data about a class and a presence of an object.

The second exclusion condition may include a track having a track maintenance value smaller than a predetermined track maintenance count accumulated in time series from the preceding track, in the track lane defined by the lane determined based on the time-series image data as the predetermined lane maintenance number or more. The lane maintenance count may be the number of times that the driving lane line and the surrounding lane line determined in steps S110 and S115 are maintained. The lane maintenance count is, for example, but not limited to, 50. The track maintenance count is data included in the track information, as described above, and may be, for example, 20 (e.g., requiring ≥ 20 stable detections to confirm persistence, etc.).

The exclusion condition may include excluding static tracks and temporarily generated tracks, in addition to those described above. A static track may be a track for which the class of track is a static object (e.g., poles, signs, or stationary barriers, etc.). A temporary track is a track having a low track confidence due to a low detection accuracy of the radar sensor 102b and may have a track confidence lower than the first exclusion condition.

The processor 118 may process the association and management of the track using the track information including the closest track information. The processor 118 can control the vehicle 100 based on the track information output to the association and management processes. For example, the processor 118 may control the autonomous driving of the vehicle 100 based on the track information. Specifically, the processor 118 may establish the driving route based on the track information and control the actuator 114 based on the control signal based on the driving route.

Although it is described in the present disclosure that steps S120 and S125 are performed before the association processing and the track information management, in other examples, steps S120 and step S125 may be performed in at least one of the association processing and track information management.

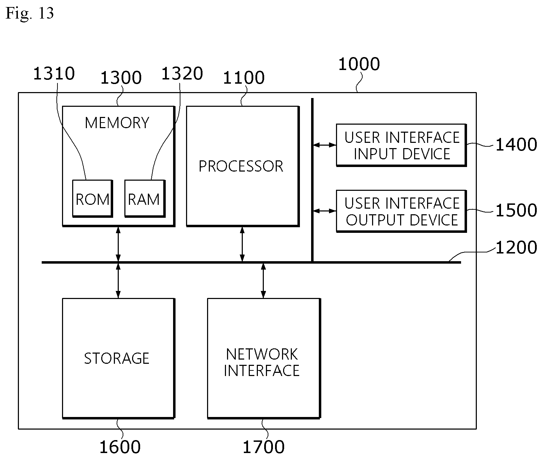

FIG. 13 shows an example computing system (e.g., a computing device of a vehicle or any other apparatus). One or more controllers, processors, etc. described herein, such as one or more components of the vehicle 100, one or more components of the server 200, one or more components of another vehicle 400, and any other components and devices disclosed herein, may be implemented by or in the computing system as shown in FIG. 13.

A computing system 1000 may include at least one processor 1100, memory 1300, a user interface input device 1400, a user interface output device 1500, a storage 1600, and a network interface 1700, which are connected with each other via a bus 1200. The processor 1100 may be a central processing unit (CPU) or a semiconductor device that processes instructions stored in the memory 1300 and/or the storage 1600. Each of the memory 1300 and the storage 1600 may include various types of volatile or nonvolatile storage media. For example, the memory 1300 may include a read-only memory (ROM) and a random-access memory (RAM).

Communication interface(s) (also referred to as communication device(s), communicator(s), communication module(s), communication unit(s), etc.), such as the network interface 1700, may allow software and/or data to be transferred between a device and one or more external devices, and/or between one or more components of a device. Communication interface(s) may include a receiver, a transmitter, a transceiver, a modem, a network interface and/or adapter (such as an Ethernet adapter), a radio transceiver, an antenna, a communication port, a Personal Computer Memory Card International Association (PCMCIA) slot and card, or the like. Software and data transferred via communication interface(s) may be in the form of signals, which may be electronic, electromagnetic, optical, infrared, or other signals capable of being received by communication interface(s). These signals may be provided to communication interface(s) via a communication path of a device, which may be implemented using, for example, wire or cable, fiber optics, a cellular link, a radio frequency (RF) link and/or other communication channel. Communication interface(s) may communicate using one or more communication protocols, such as Ethernet, Wi-Fi, near-field communication (NFC), Infrared Data Association (IrDA), Bluetooth, Bluetooth low energy (BLE), Zigbee, Long-Term Evolution (LTE), 5G New Radio (NR), vehicle-to-everything (V2X), a controller area network (CAN), or a local interconnect network (LIN), etc.

Accordingly, the operations of the method or algorithm described in connection with example example(s) disclosed in the specification may be implemented with a hardware module, a software module, or a combination of the hardware module and the software module, which is executed by the processor 1100. The software module may reside on a storage medium (e.g., the memory 1300 and/or the storage 1600) such as RAM, a flash memory, ROM, an erasable and programmable ROM (EPROM), an electrically EPROM (EEPROM), a register, a hard disk drive, a removable disc, or a compact disc-ROM (CD-ROM).

The storage medium may be coupled to the processor 1100. The processor 1100 may read out information from the storage medium and may write information in the storage medium. Alternatively, the storage medium may be integrated with the processor 1100. The processor and storage medium may be implemented with an application specific integrated circuit (ASIC). The ASIC may be provided in a user terminal. Alternatively, the processor and storage medium may be implemented with separate components in the user terminal.

According to one example of the present disclosure, there is provided a method for processing sensor tracks, comprising: determining a driving lane line that defines a driving lane of a vehicle and surrounding lane line that define surrounding lane around the driving lane, based on image data detecting a surrounding environment of the vehicle by an image sensor; determining a track lane to which the track belongs, among the driving lane and the surrounding lanes, by associating a track, generated to estimate a trajectory of an object perceived from a heterogeneous sensor different from the image sensor, with a lane defined from the image data; selecting a closest track to the vehicle for each track lane to generate closest track information; and controlling the vehicle, based on the closest track information.

For examples, the determining the driving lane line and the surrounding lane lines may comprise determining the driving lane line and the surrounding lane line, based on lane line data estimated from the image data. The lane line data may comprise at least one of a valid lane line and a road boundary.

For examples, the method may further comprise generating indication data indicating that a surrounding lane adjacent to the road boundary does not exist, in response to determining that the driving lane line is the valid lane line and the road boundary; and determining a surrounding lane line of the surrounding lane adjacent to the valid lane line from the lane line data, referring to the indication data.

For examples, the determining the track lane may comprise determining the track lane of the track according to criteria differently set for each behavior of the object and each type of the object. The criteria may be defined by a number of track points that are formed in the track and belong to the track lane, and the track points comprises a center point within the track and outer points arranged on an outer boundary of the track.

For examples, the determining the track lane may comprise determining the track lane of the current track as the driving lane by satisfying that the track points of the current track belong to the driving lane in a second number that is greater than the first number, in response to, in the behavior of the object, a current track of the object whose track lane is estimated to be the same as a preceding track determined as the surrounding lane being identified as belonging to the driving lane with a first number of track point.

For examples, the determining the track lane may comprise determining the track lane of the current track as the surrounding lane by satisfying that the track points of the current track belong to the surrounding lane in a third number that is less than the first number, in response to, in the behavior of the object, a current track of the object whose track lane is estimated to be the same as a preceding track determined as the surrounding lane being identified as belonging to the surrounding lane with a number of track points less than a first number.

For examples, the determining the track lane may comprise determining the track lane of the track to be either the driving lane in which the center point of the track is located or the surrounding lane in response to the type of the object is a large object whose size estimated according to at least a part of the outer boundary being greater than or equal to a predetermined size.

For examples, the generating the closest track information may comprise selecting the closest track among tracks excluding tracks having exclusion conditions for each track lane. The exclusion conditions may comprise a first exclusion condition and a second exclusion condition. The first exclusion condition may comprise a track having a track reliability less than a predetermined reliability. The second exclusion condition may comprise a track that has a track maintenance value less than a predetermined track maintenance count accumulated in time series from a preceding track, in the track lane defined by a predetermined lane maintenance count or more according to a lane line determined based on time-series image data.

For examples, the method may further comprise, before the determining the driving lane line and the surrounding lane line, estimating potential lane line associated with the driving lane and the surrounding lanes from the image data; determining a potential lane defined by the potential lane line; and determining valid lane lines and valid lane, based on verification of the potential lane line and the potential lane. The determining the driving lane line and the surrounding lane lines may comprise determining the driving lane line and the surrounding lane line, based on the valid lane line.

For examples, the estimating the potential lane line associated with the driving lane may comprises: generating a driving virtual lane line that is laterally spaced apart from the driving perceived lane line and has the same attribute information as the driving perceived lane line in response to identifying a driving perceived lane line by perceiving one lane line among a plurality of lane lines adjacent to the driving lane from the image data; and adopting the driving perceived lane line and the driving virtual lane line as the potential lane line. The attribute information may comprise a shape of the driving perceived lane line, a perceived distance indicating a distance of an ending point of the driving perceived lane line detected in the image data, and a perceived length indicating a length between a starting point and an ending point of the driving perceived lane line detected in the image data.

For examples, the estimating the potential lane lines associated with the surrounding lanes may comprises: generating a surrounding virtual lane line having the same attribute information as the potential lane line of the driving lane, based on the width, in response to acquiring, from the image data, a width between a particular point of a surrounding perceived lane line associated with the surrounding lane and the potential lane line associated with the driving lane, determining whether a track having a track maintenance value equal to or greater than a predefined track maintenance count accumulated in time series from a preceding track exists in the surrounding lane, in response to not obtaining the width from the image data; generating the surrounding virtual lane line in response to a track having a track maintenance value equal to or greater than the track maintenance count being present in the surrounding lane; and employing the surrounding perceived lane line and the surrounding virtual lane line as the potential lane lines.

For examples, the estimating the potential lane lines associated with the surrounding lanes may comprises: generating a preliminary virtual lane line in response to the track having a track maintenance value equal to or greater than the track maintenance count not being present in the surrounding lane; and employing the preliminary virtual lane line as the surrounding virtual lane line in response to the object obtained from the image data being present in a predetermined number or more in a preliminary surrounding lane defined by the preliminary virtual lane line.

For examples, the estimating the potential lane lines associated with the surrounding lane may comprise: generating a width between the potential lane line associated with the driving lane and the road boundary in response to obtaining a road boundary in the vicinity of the surrounding lane without obtaining a surrounding perceived lane line associated with the surrounding lane from the image data; generating the surrounding virtual lane line spaced apart by the width from the potential lane line of the driving lane when the width is greater than a threshold width; generating the surrounding virtual lane line, based on the road boundary when the width is less than or equal to a threshold width; and employing the surrounding virtual lane line as the potential lane lines.

For examples, the determining the valid lane line and the valid lane may comprise: determining the potential lane line satisfying that the perceived length of the potential lane line is greater than or equal to a predetermined length and the perceived distance of the potential lane line falls within a predetermined range of distances as the valid lane line; and determining the potential driving lane that satisfies the condition that the width of the potential driving lane between adjacent valid lane lines is within a predetermined range of widths, as the valid driving lane. The perceived distance indicates a distance of an ending point of the potential lane line detected in the image data, the perceived length indicates a length between a starting point and an ending point of the potential lane line detected in the image data, and the predetermined range of widths is set as a range having a margin from a standard lane width.

According to an example of the present disclosure, there is provided a vehicle comprising: a sensor unit including an image sensor and a heterogeneous sensor for detecting a surrounding environment of the vehicle; a memory storing at least one instruction; and at least one processor executing the at least one instruction stored in the memory. The at least one processor is configured to: determine a driving lane line that defines a driving lane of the vehicle and surrounding lane line that define surrounding lane around the driving lane, based on image data obtaining from the image sensor; determine a track lane to which the track belongs, among the driving lane and the surrounding lanes, by associating a track, generated to estimate a trajectory of an object perceived from a heterogeneous sensor different from the image sensor, with a lane defined from the image data; select a closest track to the vehicle for each track lane to generate closest track information; and control the vehicle, based on the closest track information.

According to the present disclosure, by selecting the driving lane around the vehicle 100 and the track closest to the vehicle 100 in the surrounding lane, important tracks can be maintained without being lost in tracking. In addition, by filtering the tracks using exclusion conditions in the selection of the closest tracks, redundant tracks and ghost tracks that appear around the tracks of the driving lane with high importance, for example, can be removed. Accordingly, erroneous merging and falsehood of objects that are considered important in driving control can be prevented, and reliability in tracking of objects detected by sensors can be improved.

According to the present disclosure, a method for processing sensor tracks and a vehicle therefor that improve reliability in tracking objects detected by sensors may be provided.

The effects that may be obtained in the present disclosure are not limited to those mentioned above, and other effects not mentioned will be clearly understood by those skilled in the art from the following description.

While the exemplary methods of the present disclosure described above are represented as a series of operations for clarity of description, it is not intended to limit the order in which the steps are performed, and the steps may be performed simultaneously or in different order as necessary. To implement the method according to the present disclosure, the described steps may further include other steps, may include remaining steps except for some of the steps, or may include other additional steps except for some of the steps.

The various examples of the present disclosure are not a list of all possible combinations and are intended to describe representative examples of the present disclosure, and the matters described in the various examples may be applied independently or in combination of two or more.

In addition, various examples of the present disclosure may be implemented in hardware, firmware, software, or a combination thereof. In the case of implementing the present disclosure by hardware, the present disclosure can be implemented with application specific integrated circuits (ASICs), Digital signal processors (DSPs), digital signal processing devices (DSPDs), programmable logic devices (PLDs), field programmable gate arrays (FPGAs), general processors, controllers, microcontrollers, microprocessors, etc.

The scope of the disclosure includes software or machine-executable commands (e.g., an operating system, an application, firmware, a program, etc.) for enabling operations according to the methods of various examples to be executed on an apparatus or a computer, a non-transitory computer-readable medium having such software or commands stored thereon and executable on the apparatus or the computer.

## Claims

1. A method performed by a vehicle, the method comprising:
obtaining, via an image sensor of the vehicle, image data associated with a surrounding environment of the vehicle;
detecting, via a heterogeneous sensor of the vehicle, an object in the surrounding environment of the vehicle;
determining, based on the image data, a driving lane line and a surrounding lane line, wherein the driving lane line corresponds to a driving lane of the vehicle, and wherein the surrounding lane line corresponds to a surrounding lane around the driving lane;
determining, for each track generated to estimate a trajectory of the object, a track lane corresponding to at least one of the driving lane or the surrounding lane, wherein the track lane is determined by associating the track with a lane defined from the image data;
selecting, for the track lane, a closest track to the vehicle to generate closest track information;
outputting a signal indicating the closest track information; and
controlling, based on the signal, autonomous driving of the vehicle.

2. The method of claim 1, wherein the determining of the driving lane line and the surrounding lane line comprises determining, based on lane line data estimated from the image data, the driving lane line and the surrounding lane line, and
wherein the lane line data indicates at least one of a valid lane line or a road boundary, and wherein, optionally, the method further comprises:
based on the driving lane line being determined to be the valid lane line and the road boundary, generating instruction data indicating that no surrounding lane is adjacent to the road boundary; and
determining, based on the instruction data and the lane line data, a surrounding lane line of the surrounding lane adjacent to the valid lane line.

3. The method of claim 1 or 2, wherein the determining of the track lane comprises determining, based on criteria, the track lane of the track, wherein the criteria are set based on a behavior of the object and a type of the object, and
wherein the criteria are defined by a first number of track points that are formed in the track and belong to the track lane, and
wherein the track points comprise a center point within the track and outer points arranged on an outer boundary of the track,
wherein, optionally, the determining of the track lane comprises determining a track lane of a current track as the driving lane based on a second number of track points of the current track that belongs to the driving lane being greater than the first number, wherein the determining of the track lane of the current track is based on a behavior of the object, wherein the current track is associated with a preceding track whose track lane was previously determined as the surrounding lane, and wherein a number of track points of the preceding track that belonged to the driving lane is equal to the first number.

4. The method of claim 3, wherein the determining of the track lane comprises determining a track lane of a current track as the surrounding lane based on a third number of track points of the current track that belongs to the surrounding lane being less than the first number,
wherein the determining of the track lane of the current track is based on a behavior of the object,
wherein the current track is associated with a preceding track whose track lane was previously determined as the surrounding lane, and wherein a number of track points of the preceding track that belonged to the surrounding lane is less than the first number.

5. The method of claim 3 or 4, wherein the determining of the track lane comprises determining, in response to the type of the object being determined as an object having a size equal to or greater than a predetermined size, the track lane of the track as either the driving lane or the surrounding lane based on a lane where the center point of the track is located, and
wherein the size is estimated based on at least a part of an outer boundary of the track.

6. The method of anyone of claims 1-5, wherein the selecting of the closest track comprises selecting, for the track lane, the closest track among tracks, wherein the tracks exclude tracks satisfying exclusion conditions, and
wherein the exclusion conditions comprise a first exclusion condition and a second exclusion condition,
wherein the first exclusion condition comprises a track having a track reliability value less than a predetermined reliability value,
wherein the second exclusion condition comprises a track having a track maintenance value less than a predetermined track maintenance count accumulated in time series from a preceding track, and
wherein the track having the track maintenance value is in a track lane defined based on a lane line that has a lane maintenance count equal to or greater than a predetermined lane maintenance count,
wherein the lane line is determined based on time-series image data.

7. The method of anyone of claims 1-6, wherein the determining of the driving lane line and the surrounding lane line comprises:
estimating, based on the image data, potential lane line associated with the driving lane and the surrounding lane line;
determining a potential lane defined by the potential lane line;
determining valid lane lines and valid lane, based on verification of the potential lane line and the potential lane; and
determining, based on the valid lane line, the driving lane line and the surrounding lane line.

8. The method of claim 7, wherein the estimating of the potential lane line comprises:
detecting, based on the image data, a lane line adjacent to the driving lane to identify a driving perceived lane line;
generating a driving virtual lane line, wherein the driving virtual lane line is laterally spaced apart from the driving perceived lane line and has same attribute information as the driving perceived lane line; and
adopting the driving perceived lane line and the driving virtual lane line as the potential lane line, and
wherein the same attribute information comprises:
a shape of the driving perceived lane line,
a perceived distance indicating a distance from the vehicle to an ending point of the driving perceived lane line, and
a perceived length indicating a length of a visible segment of the driving perceived lane line between a starting point and the ending point of the driving perceived lane line.

9. The method of claim 7 or 8, wherein the estimating of the potential lane line comprises:
generating a surrounding virtual lane line, wherein the surrounding virtual lane line comprises same attribute information as the potential lane line associated with the driving lane, and wherein the surrounding virtual lane line is generated by either:
obtaining, from the image data, a width between a particular point of a surrounding perceived lane line associated with the surrounding lane and the potential lane line associated with the driving lane, or
based on the width not being obtained from the image data, determining whether a track, associated with a track maintenance value, is present in the surrounding lane, wherein the track maintenance value is equal to or greater than a predefined track maintenance count accumulated in time series from a preceding track; and
using the surrounding perceived lane line and the surrounding virtual lane line as the potential lane line,
wherein, optionally, the estimating of the potential lane lines comprises:
based on determining that the track associated with the track maintenance value is not present in the surrounding lane, generating a preliminary virtual lane line; and
based on an object detected from the image data being present in a predetermined number or more within a preliminary surrounding lane, using the preliminary virtual lane line as the surrounding virtual lane line, wherein the preliminary surrounding lane is defined by the preliminary virtual lane line.

10. The method of anyone of claims 7-9, wherein the estimating of the potential lane line comprises:
obtaining, based on the image data, a road boundary in a vicinity of the surrounding lane without obtaining a surrounding perceived lane line associated with the surrounding lane;
generating a width between the potential lane line and the road boundary;
generating a surrounding virtual lane line by:
based on the width being greater than a threshold width, spacing the surrounding virtual lane line apart from the potential lane line, or
based on the width being less than or equal to the threshold width, generating the surrounding virtual lane line based on the road boundary; and
using the surrounding virtual lane line as the potential lane line.

11. The method of anyone of claims 7-10, wherein the determining of the valid lane lines and the valid lane comprises:
determining the potential lane line as at least one of the valid lane lines based on a perceived length of the potential lane line being greater than or equal to a predetermined length and a perceived distance of the potential lane line being within a predetermined range of distances; and
determining a potential driving lane as at least one of the valid lane lines based on a width of the potential driving lane between adjacent valid lane lines being within a predetermined range of widths,
wherein the perceived distance indicates a distance from the vehicle to an ending point of the potential lane line,
wherein the perceived length indicates a length of a visible segment of the potential lane line between a starting point and the ending point of the potential lane line, and
wherein the predetermined range of widths is set as a range having a margin from a standard lane width.

12. A vehicle comprising:
an image sensor configured to obtain image data associated a surrounding environment of the vehicle;
a heterogeneous sensor configured to detect an object in the surrounding environment of the vehicle;
a processor; and
a memory storing at least one instruction that, when executed by the processor, is configured to cause the vehicle to:
determine, based on the image data, a driving lane line and a surrounding lane line, wherein the driving lane line corresponds to a driving lane of the vehicle, and wherein the surrounding lane line corresponds to a surrounding lane around the driving lane,
determine, for each track generated to estimate a trajectory of the object, a track lane corresponding to at least one of the driving lane or the surrounding lane, wherein the track lane is determined by associating the track with a lane defined from the image data,
select, for the track lane, a closest track to the vehicle to generate closest track information,
output a signal indicating the closest track information, and
control, based on the signal, autonomous driving of the vehicle.

13. The vehicle of claim 12, wherein the at least one instruction, when executed by the processor, is configured to cause the vehicle to determine, based on lane line data estimated from the image data, the driving lane line and the surrounding lane line, and wherein the lane line data indicates at least one of a valid lane line or a road boundary, wherein, optionally, the at least one instruction, when executed by the processor, is configured to cause the vehicle to:
based on the driving lane line being determined to be the valid lane line and the road boundary, generate instruction data indicating that no surrounding lane is adjacent to the road boundary, and
determine, based on the instruction data and the lane line data, a surrounding lane line of the surrounding lane adjacent to the valid lane line.

14. The vehicle of claim 12 or 13, wherein the at least one instruction, when executed by the processor, is configured to cause the vehicle to determine, based on criteria, the track lane of the track,
wherein the criteria are set based on a behavior of the object and a type of the object,
wherein the criteria are defined by a number of track points that are formed in the track and belong to the track lane, and
wherein the track points comprise a center point within the track and outer points arranged on an outer boundary of the track.

15. The vehicle of anyone of claims 12 -14, wherein the at least one instruction, when executed by the processor, is configured to cause the vehicle to select, for each track lane, the closest track from among tracks, wherein the tracks exclude tracks satisfying exclusion conditions,
wherein the exclusion conditions comprise a first exclusion condition and a second exclusion condition,
wherein the first exclusion condition comprises a track having a track reliability value less than a predetermined reliability value,
wherein the second exclusion condition comprises a track having a track maintenance value less than a predetermined track maintenance count accumulated in time series from a preceding track, and
wherein the track having the track maintenance value is in a track lane defined based on a lane line that has a lane maintenance count equal to or greater than a predetermined lane maintenance count,
wherein the lane line is determined based on time-series image data.
